# EUROPEAN PATENT SPECIFICATION

(11) **EP 2 862 330 B1**
(45) Date of publication and mention of the grant of the patent: **11.07.2018**
(21) Application number: 13727500.4
(22) Date of filing: 28.05.2013
(51) Int. Cl.: H04L 29/06, H04W 80/02

(54) **SYSTEMS AND METHODS FOR IDENTIFYING ENHANCED FRAMES FOR WIRELESS COMMUNICATION**
SYSTEME UND VERFAHREN ZUR IDENTIFIZIERUNG ERWEITERTER RAHMEN FÜR DRAHTLOSE KOMMUNIKATION
SYSTÈMES ET PROCÉDÉS POUR IDENTIFIER DES TRAMES AMÉLIORÉES POUR DES COMMUNICATIONS SANS FIL

(30) Priority: 13.06.2012 US 201261659392 P; 13.02.2013 US 201361764278 P; 14.03.2013 US 201361785603 P; 24.05.2013 US 201313902626
(43) Date of publication of application: 22.04.2015
(73) Proprietor: Qualcomm Incorporated, San Diego, CA 92121-1714 (US)
(72) Inventor: ASTERJADHI, Alfred, San Diego, California 92121-1714 (US); MERLIN, Simone, San Diego, California 92121-1714 (US); ABRAHAM, Santosh Paul, San Diego, California 92121-1714 (US); WENTINK, Maarten Menzo, San Diego, California 92121-1714 (US)
(74) Representative: Wegner, Hans
(86) International application number: PCT/US2013/042919
(87) International publication number: WO 2013/188096

(56) References cited:
- US-A1- 2005 243 786
- MICHAEL BAHR (SIEMENS AG): "Frame Type Extensibility Solution ; 15-09-0825-02-004e-frame-type-extensibilit y-solution", IEEE DRAFT; 15-09-0825-02-004E-FRAME-TYPE-EXTENSIBILIT Y-SOLUTION, IEEE-SA MENTOR, PISCATAWAY, NJ USA, vol. 802.154e, no. 2, 11 January 2010 (2010-01-11), pages 1-24, XP017666206, [retrieved on 2010-01-11]
- YUAN YUNJIE ET AL: "Performance evaluation of an efficient cooperative channel reservation MAC protocol in wireless ad hoc networks", SIGNAL PROCESSING, COMMUNICATIONS AND COMPUTING (ICSPCC), 2011 IEEE INTERNATIONAL CONFERENCE ON, IEEE, 14 September 2011 (2011-09-14), pages 1-5, XP032065708, DOI: 10.1109/ICSPCC.2011.6061672 ISBN: 978-1-4577-0893-0

## Description

### BACKGROUND

### Field

The present application relates generally to wireless communications, and more specifically to systems, methods, and devices to enable wireless communication in sub-gigahertz bands. Certain aspects herein relate to indicating a frame type using a retry bit of the frame control filed of a media access control (MAC) frame.

### Background

In many telecommunication systems, communications networks are used to exchange messages among several interacting spatially-separated devices. Networks may be classified according to geographic scope, which could be, for example, a metropolitan area, a local area, or a personal area. Such networks may be designated respectively as a wide area network (WAN), metropolitan area network (MAN), local area network (LAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

The devices in a wireless network may transmit/receive information between each other. The information may comprise packets, which in some aspects may be referred to as data units. The packets may include overhead information (e.g., header information, packet properties, etc.) that helps in routing the packet through the for example user data, multimedia content, etc. as might be carried in a payload of the packet.

Accordingly, the header information is transmitted with packets such as for example described in MICHAEL BAHR (SIEMENS AG): "Frame Type Extensibility Solution". IEEE DRAFT, vol. 802.154e, no. 2, 11 January 2010. pages 1-24. Such header information may comprise a large portion of a data packet. Accordingly, transmission of data in such packets may be inefficient due to the fact that much of the bandwidth for transmitting data may be used to transmit header information as opposed to the actual data. Thus, improved systems, methods, and devices for communicating packets are desired.

### SUMMARY

The present invention defines a method according to claim 1, an apparatus according to claim 4, a method according to claim 8, an apparatus according to claim 12 and a computer-readable medium according to claim 15. Further embodiments are set forth in the dependent claims 2, 3, 5-7, 9-11, 13 and 14.

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include providing wireless communication in sub-gigahertz bands for low power and long distance wireless communications.

One aspect of the disclosure provides an implementation of a method for communicating in a wireless network. The method incudes generating a media access control frame including a header. The header includes a type field having a type value and one or more fields which have a reserved value for a particular type of media access control frame, the one or more fields having one or more values. A type of the media access control frame is indicated by both the type value and the one or more values. The method further includes transmitting the media access control frame.

Another aspect of the disclosure provides a wireless communications apparatus. The wireless communications apparatus includes a processor configured to generate a media access control frame including a header. The header includes a type field having a type value and one or more fields which have a reserved value for a particular type of media access control frame, the one or more fields having one or more values. A type of the media access control frame is indicated by both the type value and the one or more values. The wireless communications apparatus further includes a transmitter configured to transmit the media access control frame via a wireless link.

Yet another aspect of the disclosure provides a wireless communications apparatus. The wireless communications apparatus includes means for generating a media access control frame including a header. The header includes a type field having a type value and one or more fields which have a reserved value for a particular type of media access control frame, the one or more fields having one or more values. A type of the media access control frame is indicated by both the type value and the one or more values. The wireless communications apparatus further includes means for transmitting the media access control frame.

Another aspect of the disclosure provides a computer-readable medium including instructions that when executed by a computer cause the computer to perform a method of communicating in a wireless network. The method incudes generating a media access control frame including a header. The header includes a type field having a type value and one or more fields which have a reserved value for a particular type of media access control frame, the one or more fields having one or more values. A type of the media access control frame is indicated by both the type value and the one or more values. The method further includes transmitting the media access control frame.

Another aspect of the disclosure provides an implementation of a method of communicating in a wireless network. The method includes receiving a media access control frame including a header. The header includes a type field having a type value and one or more fields which have a reserved value for a particular type of media access control frame, the one or more fields having one or more values. The method further includes detecting a type of the media access control frame based on both the type value and the one or more values. The method further includes decoding the media access control frame based on the type.

Another aspect of the disclosure provides a wireless communications apparatus. The wireless communications apparatus includes a receiver configured to receive a media access control frame including a header. The header includes a type field having a type value and one or more fields which have a reserved value for a particular type of media access control frame, the one or more fields having one or more values. The apparatus further includes a processor configured to detect a type of the media access control frame based on both the type value and the one or more values. The processor is further configured to decode the media access control frame based on the type.

Another aspect of the disclosure provides a wireless communications apparatus. The wireless communications apparatus includes means for receiving a media access control frame including a header. The header includes a type field having a type value and one or more fields which have a reserved value for a particular type of media access control frame, the one or more fields having one or more values. The wireless communications apparatus further includes means for detecting a type of the media access control frame based on both the type value and the one or more values. The wireless communications apparatus further includes means for decoding the media access control frame based on the type.

Another aspect of the disclosure provides a computer-readable medium including instructions that when executed by a computer cause the computer to perform a method of communicating in a wireless network. The method includes receiving a media access control frame including a header. The header includes a type field having a type value and one or more fields which have a reserved value for a particular type of media access control frame, the one or more fields having one or more values. The method further includes detecting a type of the media access control frame based on both the type value and the one or more values. The method further includes decoding the media access control frame based on the type.

### BRIEF DESCRIPTION OF THE DRAWINGS

FIG. 1 illustrates an example of a wireless communication system in which aspects of the present disclosure may be employed.
FIG. 2 shows a functional block diagram of an exemplary wireless device that may be employed within the wireless communication system of FIG. 1.
FIG. 3 shows a functional block diagram of exemplary components that may be utilized in the wireless device of FIG. 2 to transmit wireless communications.
FIG. 4 shows a functional block diagram of exemplary components that may be utilized in the wireless device of FIG. 2 to receive wireless communications.
FIG. 5 shows an exemplary structure of a media access control (MAC) frame.
FIG. 6 shows an exemplary structure of a frame control field of the MAC frame shown in FIG. 5 showing a type field and a retry field.
FIG. 7 shows an exemplary structure of a block ACK frame that may be identified using the retry field and the type field of the frame control field shown in FIG. 6, or any other fields in a MAC header that have reserved values.
FIG. 8 shows an exemplary structure of a compressed MAC header for a MAC frame that may be identified using the retry field and the type field of the frame control field shown in FIG. 6, or any other fields in a MAC header that have reserved values.
FIG. 9 shows examples of the type of data in the fields of the compressed MAC header for a management frame.
FIG. 10 shows an exemplary structure of an enhanced management frame that may be identified using the retry field and the type field of the frame control field shown in FIG. 6, or any other fields in a MAC header that have reserved values.
FIGs. 11 and 12 show an exemplary structure of a PS-Poll frame and an enhanced PS-POLL frame that may be identified using the retry field and the type field of the frame control field shown in FIG. 6, or any other fields in a MAC header that have reserved values.
FIGs. 13 and 14 show an exemplary structure of an ACK frame and an enhanced ACK frame that may be identified using the retry field and the type field of the frame control field shown in FIG. 6, or any other fields in a MAC header that have reserved values.
FIGs. 15 and 16 show an exemplary structure of a RTS frame and an enhanced RTS frame that may be identified using the retry field and the type field of the frame control field shown in FIG. 6, or any other fields in a MAC header that have reserved values.
FIGs. 17 and 18 show an exemplary structure of a CTS frame and an enhanced CTS frame that may be identified using the retry field and the type field of the frame control field shown in FIG. 6, or any other fields in a MAC header that have reserved values.
FIG. 19 is a flow chart of an exemplary method for generating and transmitting a MAC frame indicating a frame type using the retry field and the type field of the frame control field, or any other fields in a MAC header that have reserved values.
FIG. 20 is a flow chart of an exemplary method for receiving and decoding packet with a type indicated by the retry field and the type field of a frame control field, or any other fields in a MAC header that have reserved values.
FIG. 21 is a functional block diagram of another exemplary wireless device that may be employed within the wireless communication system of FIG. 1.
FIG. 22 is a functional block diagram of yet another exemplary wireless device that may be employed within the wireless communication system of FIG. 1.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as WiFi or, more generally, any member of the IEEE 802.11 family of wireless protocols. For example, the various aspects described herein may be used as part of the IEEE 802.11ah protocol, which uses sub-lGHz bands.

In some aspects, wireless signals in a sub-gigahertz band may be transmitted according to the 802.11ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

Certain of the devices described herein may further implement Multiple Input Multiple Output (MIMO) technology and be implemented as part of the 802.11 ah standard. A MIMO system employs multiple (NT) transmit antennas and multiple (NR) receive antennas for data transmission. A MIMO channel formed by the NT transmit and NR receive antennas may be decomposed into NS independent channels, which are also referred to as spatial channels or streams, where *N_{S}* ≤ min{*N_{T}*, *N_{R}*}. Each of the NS independent channels corresponds to a dimension. The MIMO system can provide improved performance (e.g., higher throughput and/or greater reliability) if the additional dimensionalities created by the multiple transmit and receive antennas are utilized.

In some implementations, a WLAN includes various devices which are the components that access the wireless network. For example, there may be two types of devices: access points ("APs") and clients (also referred to as stations, or "STAs"). In general, an AP serves as a hub or base station for the WLAN and an STA serves as a user of the WLAN. For example, a STA may be a laptop computer, a personal digital assistant (PDA), a mobile phone, etc. In an example, an STA connects to an AP via a WiFi (e.g., IEEE 802.11 protocol such as 802.11ah) compliant wireless link to obtain general connectivity to the Internet or to other wide area networks. In some implementations an STA may also be used as an AP.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement the 802.11ah standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g., for use with hotspots), or to implement machine-to-machine communications.

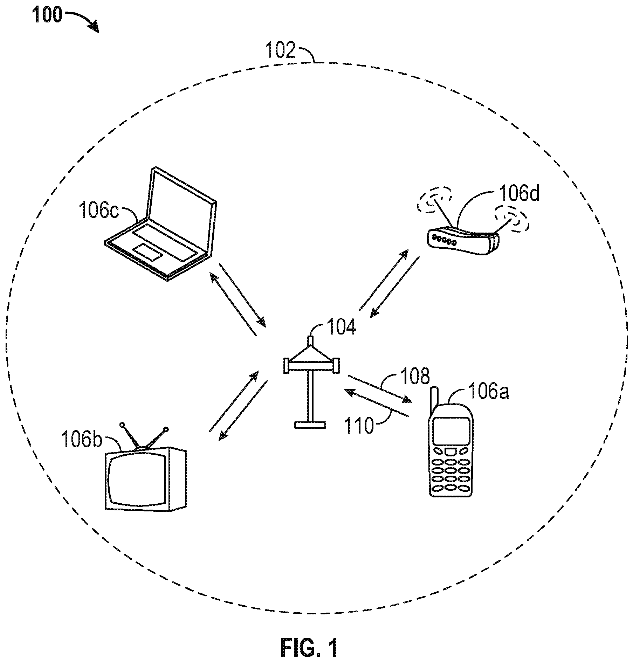

FIG. 1 illustrates an example of a wireless communication system 100 in which aspects of the present disclosure may be employed. The wireless communication system 100 may operate pursuant to a wireless standard, for example the 802.11ah standard. The wireless communication system 100 may include an AP 104, which communicates with STAs 106a, 106b, 106c, and 106d (collectively STAs 106).

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

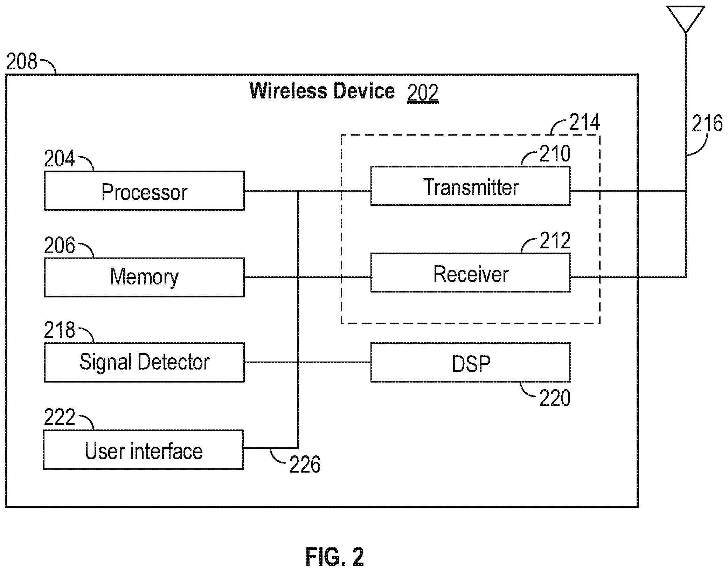

FIG. 2 illustrates various components that may be utilized in a wireless device 202 that may be employed within the wireless communication system 100. The wireless device 202 is an example of a device that may be configured to implement the various methods described herein. For example, the wireless device 202 may comprise the AP 104 or one of the STAs 106 of FIG. 1.

The wireless device 202 may include a processor 204 which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

When the wireless device 202 is implemented or used as a transmitting node, the processor 204 may be configured to select one of a plurality of media access control (MAC) header types, and to generate a packet having that MAC header type. For example, the processor 204 may be configured to generate a packet comprising a MAC header and a payload and to determine what type of MAC header to use, as discussed in further detail below.

When the wireless device 202 is implemented or used as a receiving node, the processor 204 may be configured to process packets of a plurality of different MAC header types. For example, the processor 204 may be configured to determine the type of MAC header used in a packet and process the packet and/or fields of the MAC header accordingly as further discussed below.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and a receiver 212 to allow transmission and reception of data between the wireless device 202 and a remote location. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The transmitter 210 may be configured to wirelessly transmit packets having different MAC header types. For example, the transmitter 210 may be configured to transmit packets with different types of headers generated by the processor 204, discussed above.

The receiver 212 may be configured to wirelessly receive packets having different MAC header type. In some aspects, the receiver 212 is configured to detect a type of a MAC header used and process the packet accordingly, as discussed in further detail below.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a data unit for transmission. In some aspects, the data unit may comprise a physical layer data unit (PPDU). In some aspects, the PPDU is referred to as a packet.

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user.

The various components of the wireless device 202 may be coupled together by a bus system 226. The bus system 226 may include a data bus, for example, as well as a power bus, a control signal bus, and a status signal bus in addition to the data bus. Those of skill in the art will appreciate the components of the wireless device 202 may be coupled together or accept or provide inputs to each other using some other mechanism.

Although a number of separate components are illustrated in FIG. 2, one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements. Furthermore, the processor 204 may be used to implement any of the components, modules, circuits, or the like described below, or each may be implemented using a plurality of separate elements.

For ease of reference, when the wireless device 202 is configured as a transmitting node, it is hereinafter referred to as a wireless device 202t. Similarly, when the wireless device 202 is configured as a receiving node, it is hereinafter referred to as a wireless device 202r. A device in the wireless communication system 100 may implement only functionality of a transmitting node, only functionality of a receiving node, or functionality of both a transmitting node and a receive node.

As discussed above, the wireless device 202 may comprise an AP 104 or a STA 106, and may be used to transmit and/or receive communications having a plurality of MAC header types.

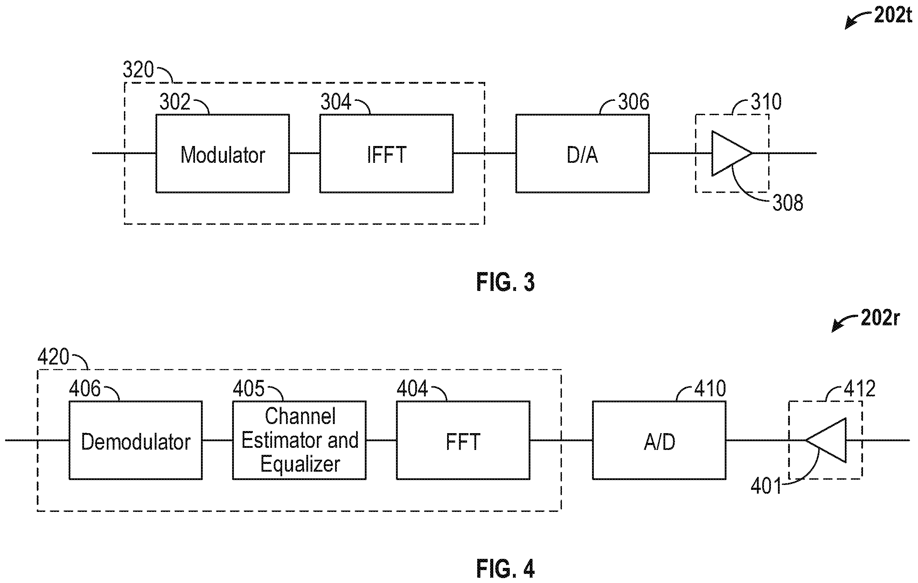

As discussed above, the wireless device 202 may comprise an AP 104 or an STA 106, and may be used to transmit and/or receive communications. FIG. 3 illustrates various components that may be utilized in the wireless device 202t to transmit wireless communications. The components illustrated in FIG. 3 may be used, for example, to transmit OFDM communications. In some aspects, the components illustrated in FIG. 3 are used to generate and transmit packets to be sent over a bandwidth of less than or equal to 1 MHz.

The wireless device 202t of FIG. 3 may comprise a modulator 302 configured to modulate bits for transmission. For example, the modulator 302 may determine a plurality of symbols from bits received from the processor 204 (FIG. 2) or the user interface 222 (FIG. 2), for example by mapping bits to a plurality of symbols according to a constellation. The bits may correspond to user data or to control information. In some aspects, the bits are received in codewords. In one aspect, the modulator 302 comprises a QAM (quadrature amplitude modulation) modulator, for example a 16-QAM modulator or a 64-QAM modulator. In other aspects, the modulator 302 comprises a binary phase-shift keying (BPSK) modulator or a quadrature phase-shift keying (QPSK) modulator.

The wireless device 202t may further comprise a transform module 304 configured to convert symbols or otherwise modulated bits from the modulator 302 into a time domain. In FIG. 3, the transform module 304 is illustrated as being implemented by an inverse fast Fourier transform (IFFT) module. In some implementations, there may be multiple transform modules (not shown) that transform units of data of different sizes. In some implementations, the transform module 304 may be itself configured to transform units of data of different sizes. For example, the transform module 304 may be configured with a plurality of modes, and may use a different number of points to convert the symbols in each mode. For example, the IFFT may have a mode where 32 points are used to convert symbols being transmitted over 32 tones (i.e., subcarriers) into a time domain, and a mode where 64 points are used to convert symbols being transmitted over 64 tones into a time domain. The number of points used by the transform module 304 may be referred to as the size of the transform module 304.

In FIG. 3. the modulator 302 and the transform module 304 are illustrated as being implemented in the DSP 320. In some aspects, however, one or both of the modulator 302 and the transform module 304 are implemented in the processor 204 or in another element of the wireless device 202t (e.g., see description above with reference to FIG. 2).

As discussed above, the DSP 320 may be configured to generate a data unit for transmission. In some aspects, the modulator 302 and the transform module 304 may be configured to generate a data unit comprising a plurality of fields including control information and a plurality of data symbols.

Returning to the description of FIG. 3, the wireless device 2025 may further comprise a digital to analog converter 306 configured to convert the output of the transform module into an analog signal. For example, the time-domain output of the transform module 306 may be converted to a baseband OFDM signal by the digital to analog converter 306. The digital to analog converter 306 may be implemented in the processor 204 or in another element of the wireless device 202 of FIG. 2. In some aspects, the digital to analog converter 306 is implemented in the transceiver 214 (FIG. 2) or in a data transmit processor.

The analog signal may be wirelessly transmitted by the transmitter 310. The analog signal may be further processed before being transmitted by the transmitter 310, for example by being filtered or by being upconverted to an intermediate or carrier frequency. In the aspect illustrated in FIG. 3, the transmitter 310 includes a transmit amplifier 308. Prior to being transmitted, the analog signal may be amplified by the transmit amplifier 308. In some aspects, the amplifier 308 comprises a low noise amplifier (LNA).

The transmitter 310 is configured to transmit one or more packets or data units in a wireless signal based on the analog signal. The data units may be generated using the processor 204 (FIG. 2) and/or the DSP 320, for example using the modulator 302 and the transform module 304 as discussed above. Data units that may be generated and transmitted as discussed above are described in additional detail below.

FIG. 4 illustrates various components that may be utilized in the wireless device 202 of FIG. 2 to receive wireless communications. The components illustrated in FIG. 4 may be used, for example, to receive OFDM communications. In some aspects, the components illustrated in FIG. 4 are used to receive data units over a bandwidth of equal to or less than 1 MHz. For example, the components illustrated in FIG. 4 may be used to receive data units transmitted by the components discussed above with respect to FIG. 3.

The receiver 412 of wireless device 202b is configured to receive one or more packets or data units in a wireless signal. Data units that may be received and decoded or otherwise processed as discussed below.

In the aspect illustrated in FIG. 4, the receiver 412 includes a receive amplifier 401. The receive amplifier 401 may be configured to amplify the wireless signal received by the receiver 412. In some aspects, the receiver 412 is configured to adjust the gain of the receive amplifier 401 using an automatic gain control (AGC) procedure. In some aspects, the automatic gain control uses information in one or more received training fields, such as a received short training field (STF) for example, to adjust the gain. Those having ordinary skill in the art will understand methods for performing AGC. In some aspects, the amplifier 401 comprises an LNA.

The wireless device 202r may comprise an analog to digital converter 410 configured to convert the amplified wireless signal from the receiver 412 into a digital representation thereof. Further to being amplified, the wireless signal may be processed before being converted by the digital to analog converter 410, for example by being filtered or by being downconverted to an intermediate or baseband frequency. The analog to digital converter 410 may be implemented in the processor 204 (FIG. 2) or in another element of the wireless device 202r. In some aspects, the analog to digital converter 410 is implemented in the transceiver 214 (FIG. 2) or in a data receive processor.

The wireless device 202r may further comprise a transform module 404 configured to convert the representation of the wireless signal into a frequency spectrum. In FIG. 4, the transform module 404 is illustrated as being implemented by a fast Fourier transform (FFT) module. In some aspects, the transform module may identify a symbol for each point that it uses. As described above with reference to FIG. 3, the transform module 404 may be configured with a plurality of modes, and may use a different number of points to convert the signal in each mode. For example, the transform module 404 may have a mode where 32 points are used to convert a signal received over 32 tones into a frequency spectrum, and a mode where 64 points are used to convert a signal received over 64 tones into a frequency spectrum. The number of points used by the transform module 404 may be referred to as the size of the transform module 404. In some aspects, the transform module 404 may identify a symbol for each point that it uses.

The wireless device 202b may further comprise a channel estimator and equalizer 405 configured to form an estimate of the channel over which the data unit is received, and to remove certain effects of the channel based on the channel estimate. For example, the channel estimator 405 may be configured to approximate a function of the channel, and the channel equalizer may be configured to apply an inverse of that function to the data in the frequency spectrum.

The wireless device 202t may further comprise a demodulator 406 configured to demodulate the equalized data. For example, the demodulator 406 may determine a plurality of bits from symbols output by the transform module 404 and the channel estimator and equalizer 405, for example by reversing a mapping of bits to a symbol in a constellation. The bits may be processed or evaluated by the processor 204 (FIG. 2), or used to display or otherwise output information to the user interface 222 (FIG. 2). In this way, data and/or information may be decoded. In some aspects, the bits correspond to codewords. In one aspect, the demodulator 406 comprises a QAM (quadrature amplitude modulation) demodulator, for example a 16-QAM demodulator or a 64-QAM demodulator. In other aspects, the demodulator 406 comprises a binary phase-shift keying (BPSK) demodulator or a quadrature phase-shift keying (QPSK) demodulator.

In FIG. 4, the transform module 404, the channel estimator and equalizer 405, and the demodulator 406 are illustrated as being implemented in the DSP 420. In some aspects, however, one or more of the transform module 404, the channel estimator and equalizer 405, and the demodulator 406 are implemented in the processor 204 (FIG. 2) or in another element of the wireless device 202 (FIG. 2).

As discussed above, the wireless signal received at the receiver 212 comprises one or more data units. Using the functions or components described above, the data units or data symbols therein may be decoded evaluated or otherwise evaluated or processed. For example, the processor 204 (FIG. 2) and/or the DSP 420 may be used to decode data symbols in the data units using the transform module 404, the channel estimator and equalizer 405, and the demodulator 406.

Data units exchanged by the AP 104 and the STA 106 may include control information or data, as discussed above. At the physical (PHY) layer, these data units may be referred to as physical layer protocol data units (PPDUs). In some aspects, a PPDU may be referred to as a packet or physical layer packet. Each PPDU may comprise a preamble and a payload. The preamble may include training fields and a SIG field. The payload may comprise a Media Access Control (MAC) header or data for other layers, and/or user data, for example. The payload may be transmitted using one or more data symbols. The systems, methods, and devices herein may utilize data units with training fields whose peak-to-power ratio has been minimized.

The wireless device 202a shown in FIG. 3 shows an example of a single transmit chain to be transmitted over an antenna. The wireless device 202b shown in FIG. 4 shows an example of a single receive chain to be received over an antenna. In some implementations, the wireless device 202a or 202b may implement a portion of a MIMO system using multiple antennas to simultaneously transmit data.

Certain implementations described herein may be directed to wireless communication systems that may be used for smart metering or be used in a smart grid network. These wireless communication systems may be used to provide sensor applications or be used in home automation. Wireless devices used in such systems may instead or in addition be used in a healthcare context, for example, for personal healthcare. They may also be used for surveillance, to enable extended-range Internet connectivity (e.g., for use with hotspots), or to implement machine-to-machine communications. Accordingly, some implementations may use low data rates such as approximately 150 Kbps. Implementations may further have increased link budget gains (e.g., around 20 dB) over other wireless communications such as 802.11b. In accordance with low data rates, if wireless nodes are configured for use in a home environment, certain aspects may be directed to implementations with good in-home coverage without power amplification. Furthermore, certain aspects may be directed to single-hop networking without using a MESH protocol. In addition, certain implementations may result in significant outdoor coverage improvement with power amplification over other wireless protocols. Furthermore, certain aspects may be directed to implementations that may accommodate large outdoor delay-spread and reduced sensitivity to Doppler. Certain implementations may achieve similar LO accuracy as traditional WiFi.

Accordingly, certain implementations are directed to sending wireless signals with low bandwidths in sub-gigahertz bands. For example, in one exemplary implementation, a symbol may be configured to be transmitted or received using a bandwidth of 1 MHz. The wireless device 202 of FIG. 2 may be configured to operate in one of several modes. In one mode, symbols such as OFDM symbols may be transmitted or received using a bandwidth of 1 MHz. In another mode, symbols may be transmitted or received using a bandwidth of 2 MHz. Additional modes may also be provided for transmitting or receiving symbols using a bandwidth of 4 MHz, 8 MHz, 16 MHz, and the like. The bandwidth may also be referred to as the channel width.

Each mode may use a different number of tones/subcarriers for transmitting the information. For example, in one implementation, a 1 MHz mode (corresponding to transmitting or receiving symbols using a bandwidth of 1 MHz) may use 32 tones. In one aspect, using a 1 MHz mode may provide for a 13 dB noise reduction as compared to a bandwidth such as 20 MHz. In addition, low rate techniques may be used to overcome effects such as frequency diversity losses due to a lower bandwidth which could result in 4-5 dB losses depending on channel conditions. To generate/evaluate symbols sent or received using 32 tones, a transform module 304 or 404 as described above with reference to FIGs. 3 and 4 above may be configured to use a 32 point mode (e.g., a 32 point IFFT or FFT). The 32 tones may be allocated as data tones, pilot tones, guard tones, and a DC tone. In one implementation, 24 tones may be allocated as data tones, 2 tones may be allocated as pilot tones, five tones may be allocated as guard tones, and 1 tone may be reserved for the DC tone. In this implementation, the symbol duration may be configured to be 40 µs including cyclic prefix. Other tone allocations are also possible.

For example, a wireless device 202a (FIG. 3) may be configured to generate a packet for transmission via a wireless signal using a bandwidth of 1 MHz. In one aspect, the bandwidth may be approximately 1 MHz where approximately 1 MHz may be within a range of 0.8 MHz to 1.2 MHz. The packet may be formed of one or more OFDM symbols having 32 tones allocated as described using a DSP 320 (FIG. 3) or other processor as described above. A transform module 304 (FIG. 3) in a transmit chain may be configured as an IFFT module operating according to a thirty-two point mode to convert the packet into a time domain signal. A transmitter 310 (FIG. 3) may then be configured to transmit the packet.

Likewise, a wireless device 202b (FIG. 4) may be configured to receive the packet over a bandwidth of 1 MHz. In one aspect, the bandwidth may be approximately 1 MHz where approximately 1 MHz may be within a range of 0.8 MHz to 1.2 MHz. The wireless device 202b may include a DSP 420 including a transform module 404

(FIG. 4) in a receive chain that may be configured as an FFT module operating according to a thirty-two point mode to transform the time domain signal into a frequency spectrum. A DSP 420 may be configured to evaluate the packet. The 1 MHz mode may support a modulation and coding scheme (MCS) for both a low data rate and a "normal" rate. According to some implementations, the preamble 702 may be designed for a low rate mode that offers reliable detection and improved channel estimation as will be further described below. Each mode may be configured to use a corresponding preamble configured to optimize transmissions for the mode and desired characteristics.

In addition to a 1 MHz mode, a 2 MHz mode may additionally be available that may be used to transmit and receive symbols using 64 tones. In one implementation, the 64 tones may be allocated as 52 data tones, 4 pilot tones, 1 DC tone, and 7 guard tones. As such, a transform module 304 or 404 of FIGs. 3 and 4 may be configured to operate according to a 64 point mode when transmitting or receiving 2 MHz symbols. The symbol duration may also be 40 µs including cyclic prefix. Additional modes with different bandwidths (e.g., 4 MHz, 8 MHz, and 16 MHz) may be provided that may use transform modules 304 or 404 operating in modes of corresponding different sizes (e.g., 128 point FFT, 256 point FFT, 512 point FFT, etc.). In addition, each of the modes described above may be configured additionally according to both a single user mode and a multi user mode. Wireless signals using bandwidths less than or equal to 2 MHz may provide various advantages for providing wireless nodes that are configured to meet global regulatory constraints over a broad range of bandwidth, power, and channel limitations.

As described above, the wireless device 202 may comprise an AP 104 or a STA 106, and may be used to transmit and/or receive media access control (MAC) frames of different types.

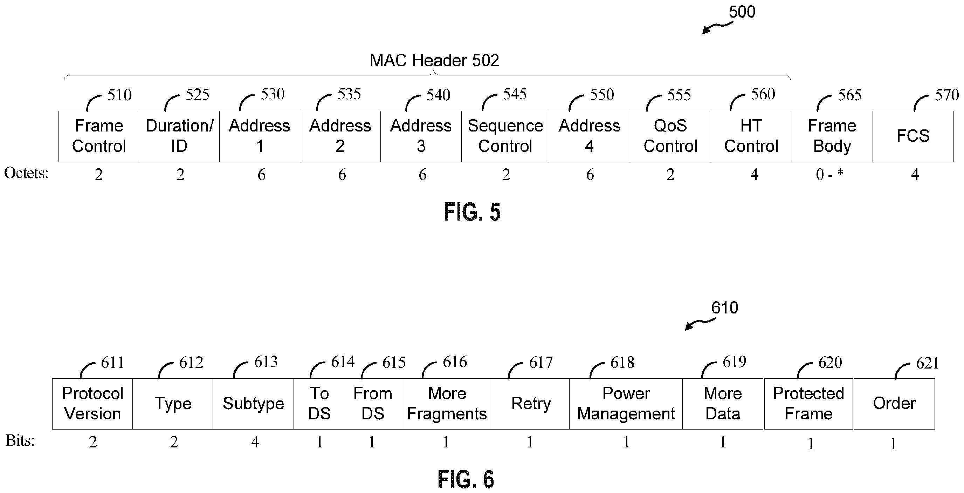

FIG. 5 shows an exemplary structure of a media access control (MAC) frame 500. As shown, the MAC frame 500 includes 11 different fields: a frame control (fc) field 510, a duration/identification (dur) field 525, a receiver address (a1) field 530, a transmitter address (a2) field 535, a destination address (a3) field 540, a sequence control (sc) field 545, a fourth address (a4) field 550, a quality of service (QoS) control (qc) field 555, a High Throughput (HT) control field 560, the frame body 565, and a frame check sequence (FCS) field 570. The fields 510-560 make up the MAC header 502. Each of the a1, a2, a3, and a4 fields 530, 535, 540, and 550 comprises a full MAC address of a device, which is a 48-bit (6 octet) value. FIG. 5 further indicates the size in octets of each of the fields 510-570. The frame body field 565 comprises a variable number of octets (e.g., from 0 to 7951) Summing the value of all of the field sizes gives the overall size of the MAC header 502, which is 38 octets. The total size of a given packet may be on the order of 200 octets. Therefore, the MAC header 502 comprises a large portion of the overall packet size, meaning the overhead for transmitting a data packet is large.

MAC frames of different types may include only a portion of the fields shown in FIG. 5. For example, if a MAC frame is a control frame, the MAC frame may not include the QoS control field 560 or the HT control field 560. In addition, depending on the type, the MAC frame 500 may include additional fields. However, in some cases, regardless of the type, the MAC frame 500 may include the frame control field 510.

FIG. 6 shows an exemplary structure of a frame control field 610 of the MAC header 502 shown in FIG. 5 showing a type field and a retry field. As shown, the frame control field includes a protocol version field 611, a type field 612, a subtype field 613, a To DS field 614, a from DS field 615, a more fragments field 616, a retry field 617, a power management field 618, a more data field 619, a protected frame field 620, and an order field 621. The type of the MAC frame 500 may be defined by the combination of type and subtype fields 612 and 613. For example, for a management frame, the type field 612 may have a binary value of 00. The subtype field 613 may then indicate the type of management field with a four bit value providing 16 different management field types. As another example, the type of MAC frame 500 may be a control frame indicated by a type field 612 with a binary value of 01. The subtype field 613 may further indicate different types of control fields such as block ack request frames, block ack frames, PS-Poll frames, request to send (RTS) fields, clear to send (CTS) fields, and the like.

In some cases it may be advantageous to define new types and formats of MAC frames for different uses/purposes. For example, it may be beneficial to alter MAC frame formats/types for a device that is configured to transmit using sub-gigahertz bands using low bandwidths such as 1 MHz and 2 MHz as described above while also configured to transmit in other bands. For example, it may be advantageous to compress field formats and remove redundant information when transmitting with low power using low bandwidths. To preserve the ability to communicate with legacy devices, a wireless device 202 may need to recognize previously defined formats. As such, it is desirable to be able to identify additional different types of MAC frames while preserving the existing MAC frame format and still being able to use the defined existing frame types. For example, it may be desirable to design new or enhanced control, management, or data frames.

In one aspect, any field in a MAC header that has a reserved value may be used to indicate a type of the MAC frame 500, including new types of MAC frames. For example, the retry field 617 in the frame control field 610 may be used to further indicate a type of the MAC frame 500. For example, the retry field 617 may be one bit in length. For data or management frames, the retry field 617 may have a value of one if the frame is a retransmission of earlier frames. However, in all other frames, including control frames and reserved frames, the retry field 617 may have a value of zero and may not be used for any purpose. As such, in one aspect, by setting the value of a retry field 617 to one with the type field 612 set as a control frame or other non-data or non-management frame, new types of MAC frames can be identified. In other words, if the type field 612 has a binary value of either 01 or 11, the retry field 617 may be set to a binary value of one to indicate a new type of frame. In conjunction, in another aspect, the subtype field 613 may be additionally used where the retry field 617 is one and type field 612 is a control field to indicate different types of MAC frames 500.

Other fields in a MAC header that have reserved values may also be used to indicate a type of the MAC frame 500. For example, the More Fragments field 616, the Protected Frame field 620, and/or the Order field 621 can be used to identify enhanced versions of control frames. Each of these fields may be used alone, or in combination with other fields to indicate enhanced versions of control frames. Similarly, the Protected Frame field 620 can be used to identify enhanced versions of any management frame that is not an authentication frame. Additionally, a fragment number field in BlockAck, AddBlockAck request, and BlockAck Request frames of can be used to identify enhanced versions of the corresponding control/action frame.

The combination of the retry field 617 as one and type field 612 as a control or reserved field, or the use of other fields with reserved values in various types of frame, can either indicate new types of MAC frames 500 or define enhanced versions of defined control, management, or data frames. For example, the enhanced field can reduce field redundancies or add additional data to previously defined frames. In addition, completely new frames may be identified. In addition, remapping of frame types may be done for certain purposes. This may allow for defining frame types that provide improved bandwidth and/or accuracy in different implementations using different PHY configurations as describe above. For example, reducing overhead may be important in configurations where a wireless device 202 is transmitting in sub-gigahertz bands and over bandwidths of 1 or 2 MHz. As such, compressed MAC frame types may provide various advantages. However, the wireless device 202 may be also configured to transmit in other modes using the previously defined MAC frame types. In this case, preserving the use of existing frame types while defining new frame types for operation in different modes may be highly advantageous. The retry field 617 in conjunction with the type field 612 may therefore be used to define new MAC frame types while preserving legacy MAC frame types. In some aspects, a combination of bits may be used to carry this type of signaling information. For example, if More Data field 619 is set to 0, the More Fragments field 616 and a End of Service Period field may both be set to 1 to indicate signaling formation, such as new types of MAC frames 500. This combination of field values is currently not allowed and is not used, and thus, the combination may be used to signal a new type of MAC frame 500 or other information.

Provided below are several examples of enhanced or new frame types that may defined and identified based on the value of one or more fields in a MAC header that have reserved values. It should be appreciated that the examples below provide just a small subset of the new/enhanced frame formats and many other MAC frame types and formats may be defined and indicated by the fields in a MAC header that have reserved values including different types of control, management, and data frames. As described above, any number of fields in a MAC header that have reserved values may be used to identify different MAC frame types.

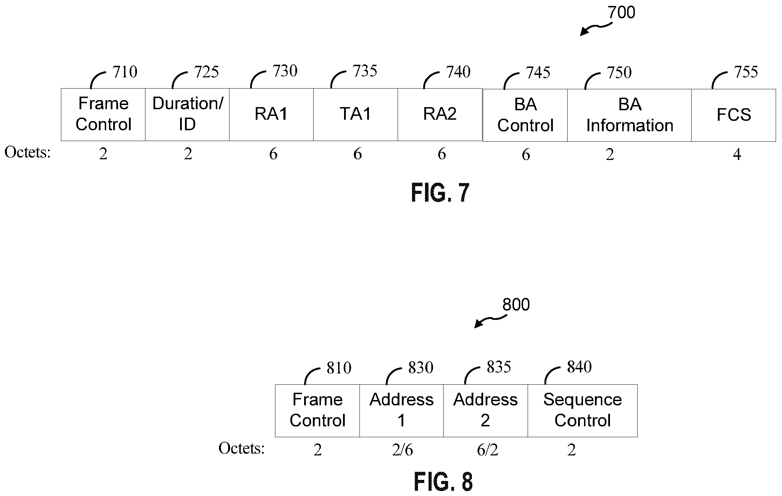

FIG. 7 shows an exemplary structure of a block ACK frame 700 that may be identified using the retry field 617 and the type field 612 of the frame control field shown in FIG. 6, or any other fields in a MAC header that have reserved values. For example, the block ACK frame 700 may define an additional type of MAC frame 500 that provides a block ACK for multiples STAs. The block ACK frame 700 may include a frame control field 710 with a type field 612 having a value indicating 01 or 11, and a retry field 617 having a value of 1. The block ACK frame 700 may further have a duration/ID field.

The block ACK frame 700 may include a first RA frame 730 with an address of a recipient STA 106 that requested a block ACK. In addition, the block ACK frame 700 includes a TA frame 735 indicating the address of the STA 104 transmitting the block ACK frame 700. In addition, the block ACK frame 700 may include a second RA frame 740 with an address of another recipient STA 106 that also requested the block ACK. In some aspects, more than two RA frames may be included. In another aspect, only one RA frame 730 may be defined with multiple addresses of different STAs 106 to which the STA 104 is transmitting the block ACK. In yet another aspect, where down link multi-user MIMO is used, the block ACK frame 700 may be defined such that various fields include information such that the block ACK information is transmitted to multiple STAs 106 simultaneously. As such, the block ACK frame may be defined with a different format than shown in FIG. 7, and identified using the retry field 617 as described above. The block ACK frame 700 may further include a block Ack control field 745, an information field 750 with the block Ack information, and a FCS field 760.

In addition to new block ACK frames, compressed MAC headers may additionally defined and indicated by the retry field 617 and type field 612, or any other fields in a MAC header that have reserved values, as described above.

FIG. 8 shows an exemplary structure of a compressed MAC header 800 for a MAC frame 500 that may be identified using the retry field 617 and the type field 612 of the frame control field 610, or any other fields in a MAC header that have reserved values, as described above. As shown, the MAC header 800 includes 4 different fields: a frame control (fc) field 805, a first address (a1) field 815, a second address (a2) field 820, and a sequence control (sc) field 830. FIG. 8 further indicates the size in octets of each of the fields 805-830. Summing the value of all of the field sizes gives the overall size of the MAC header 800, which is 12 octets (a 54% reduction in size from the MAC header 500 of FIG. 5). As shown, one of the a1 field 815 and the a2 field 820 is 6 octets in length, while the other is 2 octets in length as further discussed below. The various fields of the MAC header 800 may be utilized according to several different aspects described below.

The frame control field 810 may include the type field 612 having a value of 01 or 11 (i.e., control or reserved) and a retry field 617 having a value of one. As shown in the MAC header 800, the duration field 525 may be omitted. Normally, a wireless device 202 receiving a data packet will decode at least the duration field 525, which indicates a time the wireless device 202 should not transmit so there are no interfering transmissions during the transmit opportunity. Instead of the duration field 525, devices may be configured to not transmit data after receiving a data packet that requires an acknowledgement until a time for such acknowledgement has passed. Such acknowledgement may be an ACK or BA, indicating the packet has been received. The devices may only be configured to defer transmission until an ACK may have been received for the packet if a field (e.g., an ACK policy field) in the packet indicates that the device should defer until an ACK is received. The field may be included in the MAC header or PHY header of the packet. The transmission of the response frame may be hidden for a STA that observes the data packet causing the response frame to be sent, but the indication in the data packet that an ACK may be present causes the observing STA to defer after the end of the data packet until the response frame may have been transmitted by the STA that is the destination of the data packet.

FIG. 8 shows just one example of a compressed MAC header 800 that may be used and indicated by the retry field 617, or any other fields in a MAC header that have reserved values, as described above. It should be appreciated that a variety of different types of compressed MAC headers 800 may be further within the scope of implementations described herein. For example, different types of MAC headers can be defined for different types of management frames or control frames.

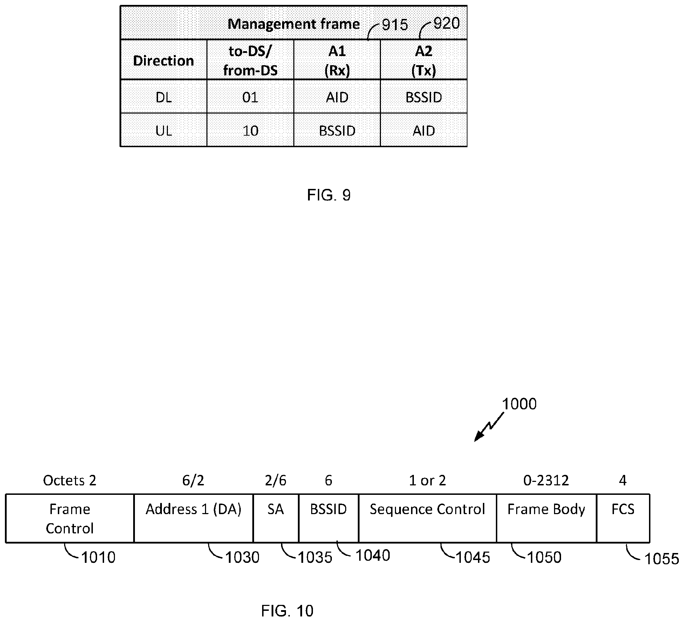

FIG. 9 shows examples of the type of data in the fields of the compressed MAC header 800 for a management frame. As shown, a value of 01 for the to-ds/from-ds fields indicates that the management frame is sent over a downlink. The al field 915 includes the AID of the receiving STA, and the a2 field 920 includes the BSSID of the transmitting AP. The ACK transmitted in response to receipt of the management frame from the receiving STA includes a pBSSID of the AP copied from the a2 field 420.

As shown, a value of 10 for the to-ds/from-ds fields indicates that the management frame is sent over an uplink. The a1 field 915 includes the BSSID of the receiving AP, and the a2 field 920 includes the AID of the transmitting STA. The ACK transmitted in response to receipt of the management frame from the receiving AP includes the AID of the STA copied from the a2 field 920.

As such, a variety of different data and formats may be used for a compressed MAC header for different types of MAC frames that may be indicated using the retry field 617, or any other fields in a MAC header that have reserved values, as described above. In addition, new/enhanced management frames can be identified using fields in a MAC header that have reserved values.

FIG. 10 shows an exemplary structure of an enhanced management frame 1000 that may be identified using the retry field 617 and the type field 612 of the frame control field 610 shown in FIG. 6, or any other fields in a MAC header that have reserved values, as described above. FIG. 10 illustrates an example of a compressed management frame 1000. As shown, the management frame 1000 includes 7 different fields: a frame control (fc) field 1005, a destination address (da) field 1015 (also referred to as a receiver address (a1)), a sender address (sa) field 1020 (also referred to as a transmitter address (a2)), a basic service set identifier (BSSID) field 1025 (also referred to as a destination address (a3)), a sequence control (sc) field 1030, a frame body 1035, and a frame check sequence (FCS) field 1040. FIG. 10 further indicates the size in octets of each of the fields 1005-1040. Summing the value of all of the field sizes gives the overall size of the management frame 1000. As shown, one of the da field 1015 and the sa field 1020 is 6 octets in length, while the other is 2 octets in length as further discussed below. The various fields of the management frame 1000 may be utilized according to several different aspects described below.

The frame control field 1010 may include a type field 612 indicating a control frame type or a reserved type and a retry field 617 having a value of one. As shown in the management frame 1000, the duration field 525 may be omitted. As described above, normally, a device receiving a frame will decode at least the duration field 525, which indicates a time the device should not transmit so there are no interfering transmissions during the transmit opportunity. Instead of the duration field 525, devices may be configured to not transmit data after receiving management frame until a time for transmitting an acknowledgement by the intended receiver of the management frame has passed. Such acknowledgement may be an ACK or block acknowledgement (BA), indicating the management frame has been received by the intended receiver. The devices may only be configured to defer transmission until an ACK may have been received for the management frame if a field (e.g., an ACK policy field) in the management frame indicates that the device should defer until an ACK is received. Accordingly, the duration field 525 may be omitted from management frames and similarly certain control frames.

In some aspects, a duration field 525 may be included in the management frame 1000, such as after the fc field 1019 and before the da field 1050. In some aspects, the duration field may have a reduced length as compared to the duration field 525. For example, the duration field may have a length of 15 bits or less. The value of the duration field may indicate the duration of the data packet in which the management frame 1000 is transmitted/received. In some aspects, the value may indicate the duration as multiples of a pre-defined value (e.g., a value expressed in microseconds). In some aspects, the value may be selected to cover one or more transmit opportunity (TX-OP) periods. The length of the duration field may therefore be based on the pre-defined value and the duration of a TX-OP period. For example, if the predefined value is 96 µs and one TX-OP period is 24.576 ms then duration field length may be of 8 bits (e.g., log2[(TX-OP period)/(pre-define value)]) such that the maximum value of the duration field covers at least on TX-OP period.

In some aspects, the BSSID field 1040 is optional, in that it may or may not be included in the management frame 1000. A field (e.g., an a3 present field) in the fc field 1010 may be used to indicate whether the BSSID field 1040 is included in the management frame 1000. Accordingly, a receiver of the management frame 1000 may check the value of such a field to determine whether or not the BSSID field 1040 is present in the management frame 1000. It should be noted that the BSSID field 1040 may be located after the sequence control field 1045 instead of before the sequence control field 1045 as indicated in FIG. 10.

In some aspects, the sc field 1045 may include a short sequence number (SN) subfield of 8 bits or less that includes the value of a short SN. In some aspects, the short sequence number subfield corresponds to the 8 least significant bits (lsb) of a 12-bit sequence number subfield as defined for an uncompressed management frame. In some aspects, if the value of such a short sequence number subfield is 0, the transmitter may send a frame with an uncompressed management frame with the full sequence number instead of a compressed management frame with a short sequence number of value 0. In some aspects, the short sequence number subfield is a different 8-bits of the sc field 1030. In some aspects, additionally or alternatively, the sc field 1045 may selectively include an extended field. In some aspects, presence or absence of such an extended field in the sc field 1045 of the management frame 1000 may be indicated by the value of one or more bits in the fc field 1010. The extended field may include a fragmentation number subfield (e.g., 4 bits or less), a retry subfield (e.g., 1 bit), a more frag subfield (e.g., 1 bit), and/or a traffic class indication subfield (e.g., 3 bits).

For any of the compressed management frames, certain fields may further be added or modified to support certain additional features. In some aspects, an extended frame control (efc) field may be added to any of the compressed management frames described herein. The efc field may comprise 3 bits. The efc field may be the last 3 bits of an aid field of the compressed management frame. The efc may be utilized to add information for new features. For example, in some aspects, an a3 present subfield may be added to the fc field or another field (e.g., efc field) of the management frame to indicate whether an a3 address (3rd address identifying a device) is included in the compressed management frame. Additionally or alternatively, in some aspects, quality of service (QoS) subfields that indicate the value of certain QoS parameters are added to the fc field or another field of the management frame (e.g., efc field), such as an access control (ac) subfield, an end of service period (eosp) subfield, an a-msdu subfield, and/or a queue size subfield. Additionally or alternatively, in some aspects, an ACK policy subfield may be moved to the SIG field of the compressed management frame. Additionally or alternatively, in some aspects, an a4 subfield may be added to the fc field or another field (e.g., efc field) of the management frame to indicate whether the packet is to be relayed. The a4 subfield may be 1 bit. It should be noted that any combination of these fields may be used in any of the compressed management frames described herein to support the features of the fields. In some aspects, the compressed management frame indicated by a value of 1 for the retry subfield 617 may support features and have a format as discussed herein. As such, a variety of different types of management frames/formats may be indicated by using a retry field having a value of 1.

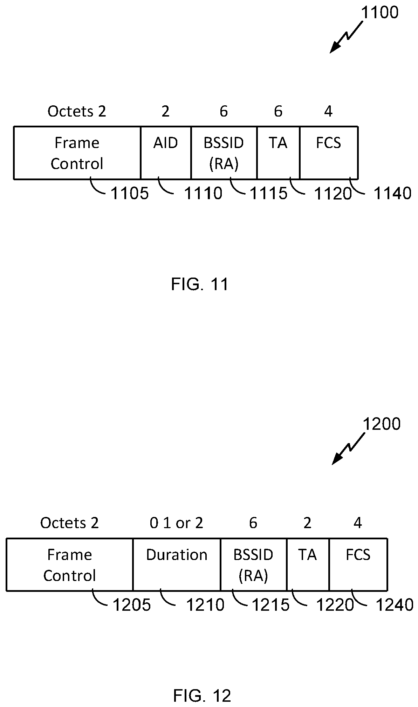

FIGs. 11 and 12 show an exemplary structure of a PS-Poll frame 1100 and an enhanced PS-POLL frame 1200 that may be identified using the retry field 617 and the type field 612 of the frame control field 610 shown in FIG. 6, or any other fields in a MAC header that have reserved values. FIG. 11 illustrates an uncompressed power save poll (PS-Poll) control frame 1100. A PS-Poll may be transmitted by a device to determine whether a wireless device 202 is in a power save mode and/or when the wireless device 202 will not be in a power save mode. As shown, the PS-Poll frame 1100 includes 5 different fields: a frame control (fc) field 1205, a duration field 1110, a receiver address (ra) field 1115 (also referred to as a receiver address (a1)), a transmitter address (ta) field 1120 (also referred to as a transmitter address (a2)), and a frame check sequence (FCS) field 1540. FIG. 11 further indicates the size in octets of each of the fields 1105-1510. Each of the ra and ta fields 1115-1120 comprises a full MAC address of a wireless device 202, which is a 48-bit (6 octet) value. The duration field 1110 includes an AID of the wireless device 202 sending the PS-Poll frame 1100. Summing the value of all of the field sizes gives the overall size of the uncompressed PS-Poll frame 1100, which is 20 octets. In one aspect, the frame control field 1105 may include a type field indicating a control frame type (i.e., 01). In this case, the retry field 617 may have a value of zero.

FIG. 12 illustrates an enhanced (e.g., compressed) power save poll (PS-Poll) control frame 1200. As shown, the PS-Poll frame 1200 includes 5 different fields: a frame control (fc) field 1205, a duration field 1210 (which may be removed), a receiver address (ra) field 1215 (also referred to as a receiver address (a1)), a transmitter address (ta) field 1220 (also referred to as a transmitter address (a2)), and a frame check sequence (FCS) field 1240. FIG. 12 further indicates the size in octets of each of the fields 1205-1240. As shown, the ra field 1215 is 6 octets in length for a global identifier, and the ta field 1220 is 2 octets in length for a local identifier. The duration field 1210 may be reduced in size (e.g., to 1 byte) from duration field 1210 of the uncompressed PS-Poll control frame 1100, for example, by having the value of the duration field 1210 indicate a number of transmit opportunity (TX-OP) periods as discussed above. The duration field 1210 may indicate a data delivery time. In one aspect, the duration field 1210 itself can be used to identify a PS-Poll frame 1200 with enhanced functionality. As an example, if bit 15 of the duration field 1210 is set to one, the duration field 1210 may be interpreted as the AID of the STA, and if bit 15 of the duration field 1210 is set to zero, the duration field 1210 may be interpreted as a field that stores the duration (in any time unit) during which the NAV is set for the current transmission. For example, if bit 15 of the duration field 1210 is set to zero, the duration field 1210 may indicate a number of TX-OP periods during which the NAV is set for the current transmission. In one aspect, an ACK indication field may be used to indicate how the duration field 1210 should be interpreted. For example, if the ACK indication field of the PS-Poll frame 1200 has a value of 00, then the duration field 1210 identifies a time duration of the NAV setting, for any other values it indicates the AID of the STA generating the PS-Poll. Any other field in the PS-Poll frame 1200 that has reserved bits may also be used to indicate how the duration field 1210 may be interpreted. The frame control field 1205 may have a type field 612 indicating a control frame type with a retry field 617 having a value of one to indicate the enhanced PS-Poll frame type. In some cases, the subtype field 613 may further indicate that this is an enhanced PS-Poll frame to differentiate between other enhanced types. In one aspect, the PS-Poll frame 1200 may include additional packet information as well as other fields. As such, a variety of different types of enhanced PS-Poll frames may be defined and identified using the retry field 617 a described, or any other fields in a MAC header that have reserved values.

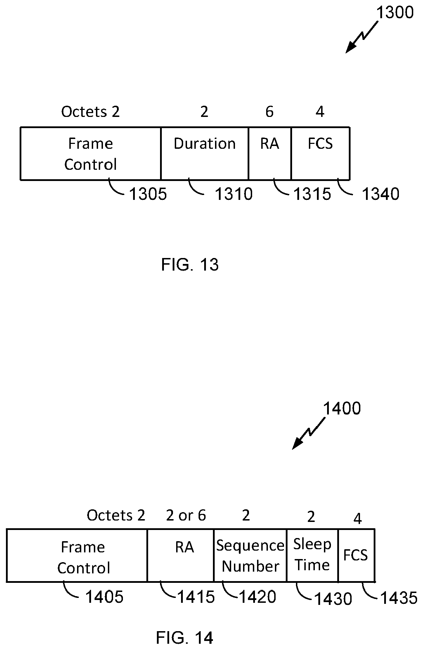

FIGs. 13 and 14 show an exemplary structure of an ACK frame 1300 and an enhanced ACK frame 1400 that may be identified using the retry field 617 and the type field 612 of the frame control field 610 shown in FIG. 6, or any other fields in a MAC header that have reserved values. FIG. 13 illustrates an uncompressed ACK control frame 1300. An ACK 1300 may be transmitted by a device in response to receipt of a frame. As shown, the ACK frame 1300 includes 4 different fields: a frame control (fc) field 1305, a duration field 1310, a receiver address (ra) field 1315 (also referred to as a receiver address (al)), and a frame check sequence (FCS) field 1340. FIG. 13 further indicates the size in octets of each of the fields 1305-1340. The ra field 1315 comprises a full MAC address of a device, which is a 48-bit (6 octet) value. Summing the value of all of the field sizes gives the overall size of the uncompressed ACK frame 1300, which is 14 octets. In this case, the frame control field 1305 may have a type field 612 having a value indicating a control field. In this case, the retry field 617 may have a value of zero.

FIG. 14 illustrates an enhanced ACK control frame. As shown, the ACK frame 1400 includes 5 different fields: a frame control (fc) field 1405, a receiver address (ra) field 1415 (also referred to as a receiver address (al)), a sequence number field 1420, a sleep time field 1430, and a frame check sequence (FCS) field 1440. In some cases, one or both of the sequence number field 1420 and the sleep time field 1430 may be omitted. FIG. 14 further indicates the size in octets of each of the fields 1405-1440. As shown, the ra field 1415 is 6 octets in length for a global identifier or 2 octets in length for a local identifier. In one aspect, the ra field 1415 is copied from a field of the frame for which the ACK frame 1400 is sent as a response. In another aspect, the value of the ra field 1415 is the AID of the transmitting device (or the 13 lsb of the MAC address of the transmitting device or a hash of either). A recipient of the ACK may determine if it is a ACK transmitted based on an frame transmitted by the recipient by determining if the ACK is received a short inter frame space (SIFS) time after the frame was transmitted. The frame control field 1405 may have a retry field 617 with a value of one indicating that it is an enhanced ACK control frame type. As described, a variety of different format and field types may be provided for an enhanced ACK frame type and indicated by the retry field 617, or any other fields in a MAC header that have reserved values as described above.

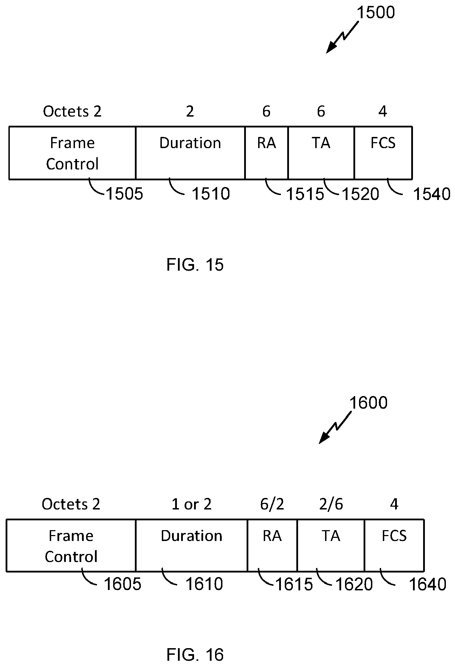

FIGs. 15 and 16 show an exemplary structure of a RTS frame 1500 and an enhanced RTS frame 1600 that may be identified using the retry field 617 and the type field 612 of the frame control field 610 shown in FIG. 6, or any other fields in a MAC header that have reserved values. FIG. 15 illustrates an uncompressed request to send (RTS) control frame 1500. An RTS may be transmitted by a device requesting a channel for transmission. As shown, the RTS frame 1500 includes 5 different fields: a frame control (fc) field 1505, a duration field 1510, a receiver address (ra) field 1515 (also referred to as a receiver address (a1)), a transmitter address (ta) field 1520 (also referred to as a transmitter address (a2)), and a frame check sequence (FCS) field 1540. FIG. 15 further indicates the size in octets of each of the fields 1505-1540. Each of the ra and ta fields 1515-1520 comprises a full MAC address of a device, which is a 48-bit (6 octet) value. Summing the value of all of the field sizes gives the overall size of the uncompressed RTS frame 1500, which is 20 octets. The uncompressed RTS frame 1600 may be indicated by a type field 612 in the frame control field 1505 indicating a control frame. In this case, the retry field 617 may have a value of zero.

FIG. 16 illustrates an enhanced/compressed request to send (RTS) control frame. As shown, the RTS frame 1600 includes 5 different fields: a frame control (fc) field 1605, a duration field 1610, a receiver address (ra) field 1615 (also referred to as a receiver address (al)), a transmitter address (ta) field 1620 (also referred to as a transmitter address (a2)), and a frame check sequence (FCS) field 1640. FIG. 16 further indicates the size in octets of each of the fields 1605-1640. As shown, one of the ra field 1615 and the ta field 1620 is 6 octets in length for a global identifier, while the other is 2 octets in length for a local identifier as discussed above. For example, for an RTS sent from an AP to a STA, the ra field 1615 may include a 2 byte AID of the AP, the ta field 1620 may include a 6 byte BSSID, and a from-AP field of the fc field 1605 may have a value of 1. In another example, for an RTS sent from a STA to an AP, the ra field 1615 may include a 6 byte BSSID, the ta field 1620 may include a 2 byte AID of the STA, and a from-AP field of the fc field 1605 may have a value of 0. The duration field 1610 may be reduced in size (e.g., to 1 byte) from duration field 1510 of the uncompressed RTS control frame 1500, for example, by having the value of the duration field 1610 indicate a number of transmit opportunity (TX-OP) periods as discussed above. The frame control field 1605 may have a type field 612 having a value indicating a control frame and a retry field 617 having a value of one to indicate that the RTS control frame 1600 is an enhanced RTS control frame. It should be appreciated that the enhanced RTS control frame may comprise a variety of different formats/values to reduce field redundancies and include other information not defined by existing RTS control frame formats.

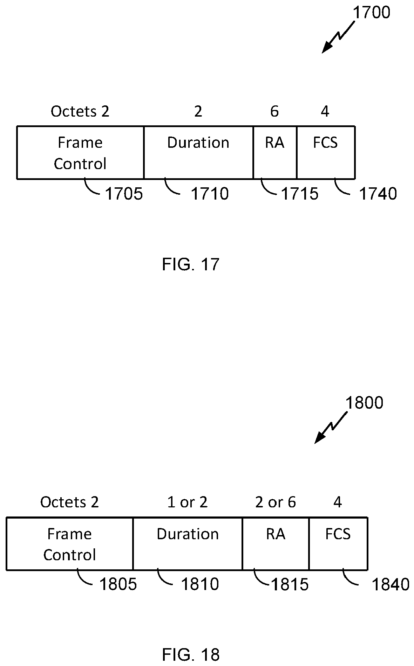

FIGs. 17 and 18 show an exemplary structure of a CTS frame 1700 and an enhanced CTS frame 1800 that may be identified using the retry field 617 and the type field 612 of the frame control field 610 shown in FIG. 6, or any other fields in a MAC header that have reserved values. FIG. 17 illustrates an uncompressed clear to send (CTS) control frame. A CTS may be transmitted by a device to reserve a channel for communication, such as in response to receipt of a RTS. As shown, the CTS frame 1700 includes 4 different fields: a frame control (fc) field 1705, a duration field 1710, a receiver address (ra) field 1715 (also referred to as a receiver address (a1)), and a frame check sequence (FCS) field 1740. FIG. 17 further indicates the size in octets of each of the fields 1705-1740. The ra field 1715 comprises a full MAC address of a device, which is a 48-bit (6 octet) value. Summing the value of all of the field sizes gives the overall size of the uncompressed CTS frame 1700, which is 14 octets. The uncompressed CTS frame 1700 may be indicated by a type field 612 in the frame control field 1705 indicating a control frame. In this case, the retry field 617 may have a value of zero.

FIG. 18 illustrates an enhanced/compressed clear to send (CTS) control frame. As shown, the CTS frame 1800 includes 4 different fields: a frame control (fc) field 1805, a duration field 1810, a receiver address (ra) field 1815 (also referred to as a receiver address (a1)), and a frame check sequence (FCS) field 1840. FIG. 18 further indicates the size in octets of each of the fields 1805-1840. As shown, the ra field 1815 is 6 octets in length for a global identifier or 2 octets in length for a local identifier. In one aspect, the ra field 1815 is copied from the ta field of the RTS control frame for which the CTS frame 1800 is sent as a response. In another aspect, the value of the ra field 1815 is the AID of the transmitting device (or the 13 lsb of the MAC address of the transmitting device or a hash of either). The duration field 1810 may be reduced in size (e.g., to 1 byte) from duration field of the uncompressed CTS control frame, for example, by having the value of the duration field 1810 indicate a number of transmit opportunity (TX-OP) periods as discussed above. A recipient of the CTS may determine if it is a CTS transmitted based on an RTS transmitted by the recipient by determining if the CTS is received a short inter frame space (SIFS) time after the RTS was transmitted. Alternatively, a recipient of the CTS may be the transmitter of the CTS and therefore can identify it transmitted the CTS. The frame control field 1805 may have a type field 612 having a value indicating a control frame and a retry field 617 having a value of one to indicate that the CTS control frame 1800 is an enhanced CTS control frame. It should be appreciated that the enhanced CTS control frame may comprise a variety of different formats/values to reduce field redundancies and include other information not defined by existing CTS control frame formats.

As such, FIGs. 7-10 define a variety of different types of MAC frames. As described, a receiver 212 may identify the types of theses frames by detecting that the type field 612 of a frame control field 610 has a value indicating a control frame or a reserved frame and a retry field 617 of the frame control field 610 has a value of one, or by identifying values of any other fields in a MAC header that have reserved values as described above. Any number of other MAC frame types/formats may further be defined and are within the scope of implementations described herein.

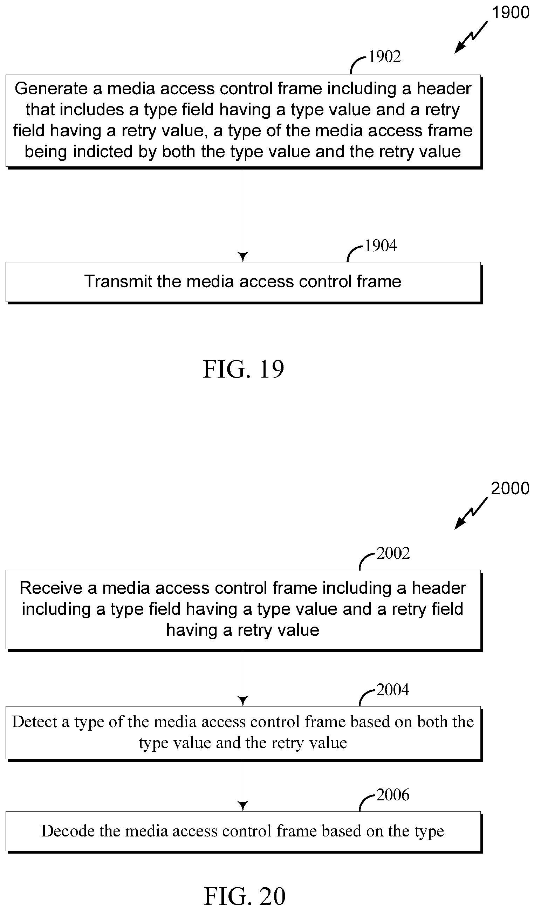

FIG. 19 is a flow chart of an exemplary method 1900 for generating and transmitting a MAC frame 500 indicating a frame type using the retry field 617 and the type field 612 of the frame control field 610, or any other fields in a MAC header that have reserved values. The frames (within packets) may be generated at either the AP 104 or the STA 106 and transmitted to another node in the wireless network 100. Although the method 1900 is described below with respect to elements of the wireless device 202, those having ordinary skill in the art will appreciate that other components may be used to implement one or more of the steps described herein.

At block 1902, a media access control frame is generated that includes a header. The header includes a type field having a type value and a retry field having a retry value. A type of the media access frame is indicated by both the type value and the retry value. The generation may be performed by the processor 204 and/or the DSP 220. At block 1904, the media access control frame is transmitted. The transmitter 210 may transmit the media access control frame within a packet. Further, operation of the transmitter 210 may in some aspects be controlled at least in part by the processor 204.

FIG. 20 is a flow chart of an exemplary method 2000 for receiving and decoding packet with a type indicated by the retry field 617 and the type field 612 of a frame control field 610, or any other fields in a MAC header that have reserved values. The method 2000 may be used to receive any of the frames (within packets) described above. The frames may be received at either the AP 104 or the STA 106 from another node in the wireless network 100. Although the method 2000 is described below with respect to elements of the wireless device 202, those having ordinary skill in the art will appreciate that other components may be used to implement one or more of the steps described herein.

At block 2002, a media access control frame is received including a header. The header includes a type field having a type value and a retry field having a retry value. The reception may be performed by the receiver 212, for example. Further, operation of the receiver 212 may in some aspects be controlled at least in part by the processor 204. At block 2004, a type of the media access control frame is detected based on both the type value and the retry value. The detection may be performed by the processor 204, the signal detector 218, and/or the DSP 220. At block 2006, the media access control frame may be decoded based on the type. The decoding may be performed by the processor 204, the signal detector 218, and/or the DSP 220.

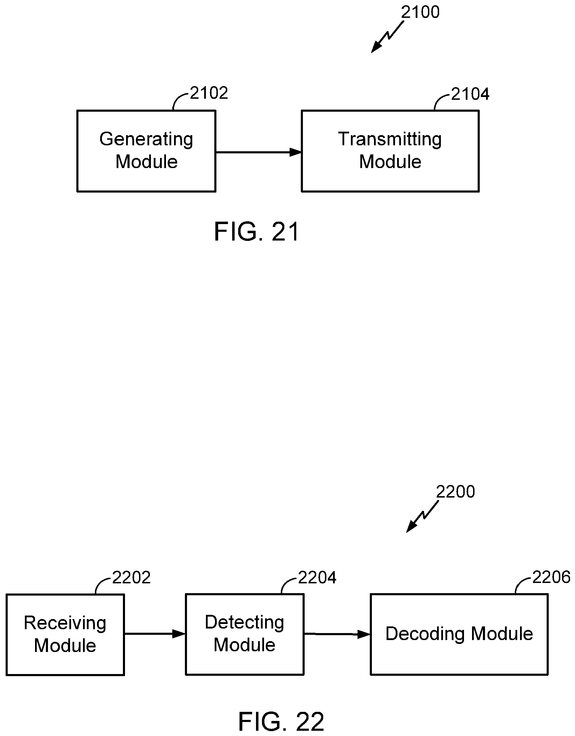

FIG. 21 is a functional block diagram of another exemplary wireless device 2100 that may be employed within the wireless communication system 100. Those skilled in the art will appreciate that a wireless communication device 2100 may have more components than the wireless communication devices shown in FIGs. 2-4. The wireless communication device 2100 shown includes only those components useful for describing some prominent features of certain implementations. The device 2100 includes a generating module 2102 for encoding data for wireless transmission. In some cases a means for generating may include the generating module 2102. The generating module 2102 may be configured to perform one or more of the functions described above with respect to block 1902 of FIG. 19. The device 2100 further comprises a transmitting module 2104 for wirelessly transmitting the output from the generating module 2102. The transmitting module 2104 may be configured to perform one or more of the functions discussed above with respect to the block 1904 illustrated in FIG. 19. The transmitting module 2104 may correspond to the transmitter 210. In some cases, a means for transmitting may include the transmitting module 2104. The transmitting module 2104 may include a variety of components including, but not limited to, a constellation mapper, a modulator, an IDFT (inverse discrete time fourier transform module or IFFT 304 as described above with reference to FIG. 3), a digital to analog converter, an amplifier, an antenna, and other components.

FIG. 22 is a functional block diagram of yet another exemplary wireless device 2200 that may be employed within the wireless communication system 100. Those skilled in the art will appreciate that a wireless communication device 2200 may have more components than the wireless communication devices shown in FIGs. 2-4. The device 2200 comprises a receiving module 2202 for wirelessly receiving data. The receiving module 2002 may be configured to perform one or more of the functions discussed above with respect to the block 2002 illustrated in FIG. 20. The receiving module 2202 may correspond to the receiver 212, and may include the amplifier 401. In some cases, a means for receiving may include the receiving module 2202. The device 2200 further comprises a detecting module 2204. The detecting module 2204 may be configured to perform one or more of the functions discussed above with respect to block 2004 of FIG. 20. In some cases a means for detecting comprises the detection module 2204. The device 2200 further comprises a decoding module 2206 for evaluating a wireless signal. The decoding module 2206 may be configured to perform one or more of the functions discussed above with respect to the block 2006 illustrated in FIG. 20. In some cases a means for decoding may include the decoding module 2204.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of' a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

In the following further examples are described to facilitate the understanding of this invention.

In a first further example a method of communicating in a wireless network is described, the method comprising: generating by a processor a media access control frame comprising a header comprising: a type field having a type value; and one or more fields which have a reserved value for a particular type of media access control frame, the one or more fields having one or more values, wherein the type of the media access control frame is indicated by both the type value and the one or more values; and transmitting the media access control frame. Also, the one or more fields may comprise a retry field, and the one or more values may comprise a retry value. Further, the retry value might have a first binary value of 0 or 1, and wherein the type value might have a second binary value of 01 or 11 when the retry value is 1. Also, the type of the media access control frame may correspond to a frame type that is reduced in length when the retry value is one as compared to a media access control frame type defined when the retry value is a zero. Further, the type of the media access control frame might be a block acknowledgement frame for multiple access terminals. Also, the type of the media access control frame might be a frame indicating a shortened MAC header for data frames. Further, the type of the media access control frame might be a frame indicating a shortened MAC header for management frames. Also, the type of the media access control frame might be one of an enhanced PS-POLL frame, an enhanced ACK frame including a sequence number and/or a sleep time, an enhanced RTS frame, or an enhanced CTS frame. Further, the type of the media access control frame might be an enhanced PS-POLL frame, and wherein the one or more fields might be a duration field and the one or more values might be a duration value. Also, the type of the media access control frame might be an enhanced PS-POLL frame, and wherein the one or more fields might be an ACK indication field and the one or more values might be an ACK indication value. Also, the header may further comprise a subtype field having a subtype value, and wherein the type of the media access control frame might be further indicated by the subtype value.

In another further example a wireless communications apparatus is described comprising: a processor configured to generate a media access control frame comprising a header comprising: a type field having a type value; and one or more fields which have a reserved value for a particular type of media access control frame, the one or more fields having one or more values, wherein the type of the media access control frame is indicated by both the type value and the one or more values; and a transmitter configured to transmit the media access control frame via a wireless link. Also, the one of more fields may comprise a retry field and the one or more values may comprise a retry value. Further, the retry value might have a first binary value of 0 or 1, and wherein the type value might have a second binary value of 01 or 11 when the retry value is 1. Also, the type of the media access control frame may correspond to a frame type that is reduced in length when the retry value is one as compared to a media access control frame type defined when the retry value is a zero. Further, the header may further comprise a subtype field having a subtype value, and wherein the type of the media access control frame might be further indicated by the subtype value. Also, the type of the media access control frame might be a block acknowledgement frame for multiple access terminals. Further, the type of the media access control frame might be a frame indicating a shortened MAC header for data frames. Also, the type of the media access control frame might be a frame indicating a shortened MAC header for management frames. Further, the type of the media access control frame might be one of an enhanced PS-POLL frame, an enhanced ACK frame including a sequence number and/or a sleep time, an enhanced RTS frame, or an enhanced CTS frame. Also, the type of the media access control frame might be an enhanced PS-POLL frame, and wherein the one or more fields might be a duration field and the one or more values might be a duration value. Further, the type of the media access control frame might be an enhanced PS-POLL frame, and wherein the one or more fields might be an ACK indication field and the one or more values might be an ACK indication value. Also, the one or more fields which might have a reserved value may comprise two or more fields which, in combination, have a reserved value for a particular type of media access control frame, the two or more fields having two or more values, wherein the type of the media access control frame might be indicated by both the type value and the two or more values in combination.

In yet another further example, a wireless communications apparatus is described comprising: means for generating a media access control frame comprising a header comprising: a type field having a type value; and one or more fields which have a reserved value for a particular type of media access control frame, the one or more fields having one or more values, wherein the type of the media access control frame is indicated by both the type value and the one or more values; and means for transmitting the media access control frame. Also, the one of more fields may comprise a retry field and the one or more values may comprise a retry value. Further, the retry value might have a first binary value of 0 or 1, and wherein the type value might have a second binary value of 01 or 11 when the retry value is 1. Also, the type of the media access control frame may correspond to a frame type that is reduced in length when the retry value is one as compared to a media access control frame type defined when the retry value is a zero. The header may further comprise a subtype field having a subtype value, and wherein the type of the media access control frame might be further indicated by the subtype value. Also, the type of the media access control frame might be a block acknowledgement frame for multiple access terminals. Further, the type of the media access control frame might be a frame indicating a shortened MAC header for data frames. Also, the type of the media access control frame might be a frame indicating a shortened MAC header for management frames. Further, the type of the media access control frame might be one of an enhanced PS-POLL frame, an enhanced ACK frame including a sequence number and/or a sleep time, an enhanced RTS frame, or an enhanced CTS frame. Also, the type of the media access control frame might be an enhanced PS-POLL frame, and wherein the one or more fields might be a duration field and the one or more values might be a duration value. Further, the type of the media access control frame might be an enhanced PS-POLL frame, and wherein the one or more fields is an ACK indication field and the one or more values might be an ACK indication value. Also, the one or more fields which might have a reserved value might comprise two or more fields which, in combination, have a reserved value for a particular type of media access control frame, the two or more fields having two or more values, wherein the type of the media access control frame might be indicated by both the type value and the two or more values in combination.

In another further example a computer-readable medium is described comprising instructions that when executed by a computer cause the computer to perform a method of communicating in a wireless network, the method comprising: generating a media access control frame comprising a header comprising: a type field having a type value; and one or more fields which have a reserved value for a particular type of media access control frame, the one or more fields having one or more values, wherein the type of the media access control frame is indicated by both the type value and the one or more values; and transmitting the media access control frame. Also, the one of more fields may comprise a retry field and the one or more values may comprise a retry value. Further, the retry value might have a first binary value of 0 or 1, and wherein the type value might have a second binary value of 01 or 11 when the retry value is 1. Also, the type of the media access control frame might corresponds to a frame type that might be reduced in length when the retry value is one as compared to a media access control frame type defined when the retry value is a zero. Further, the header may further comprise a subtype field having a subtype value, and wherein the type of the media access control frame might be further indicated by the subtype value. Also, the type of the media access control frame might be a block acknowledgement frame for multiple access terminals. Further, the type of the media access control frame might be a frame indicating a shortened MAC header for data frames. Also, the type of the media access control frame might be a frame indicating a shortened MAC header for management frames. Further, the type of the media access control frame might be one of an enhanced PS-POLL frame, an enhanced ACK frame including a sequence number and/or a sleep time, an enhanced RTS frame, or an enhanced CTS frame. Also, the type of the media access control frame might be an enhanced PS-POLL frame, and wherein the one or more fields might be a duration field and the one or more values might be a duration value. Further, the type of the media access control frame might be an enhanced PS-POLL frame, and wherein the one or more fields might be an ACK indication field and the one or more values might be an ACK indication value. Also, the one or more fields which have a reserved value may comprise two or more fields which, in combination, have a reserved value for a particular type of media access control frame, the two or more fields might have two or more values, wherein the type of the media access control frame might be indicated by both the type value and the two or more values in combination.

In yet another further example a method of communicating in a wireless network is described, the method comprising: receiving with a receiver a media access control frame comprising a header comprising: a type field having a type value; and one or more fields which have a reserved value for a particular type of media access control frame, the one or more fields having one or more values; detecting a type of the media access control frame based on both the type value and the one or more values; and decoding the media access control frame based on the type. Also, the one or more fields may comprise a retry field and the one or more values may comprise a retry value. Further, the retry value might have a first binary value of 0 or 1, and wherein the type value might have a second binary value of 01 or 11 when the retry value is 1. Also, the type of the media access control frame may correspond to a frame type that is reduced in length when the retry value might be one as compared to a media access control frame type defined when the retry value is a zero. Also, the header may further comprise a subtype field having a subtype value, and wherein the type of the media access control frame is further indicated by the subtype value. Further, the media access control frame might be a block acknowledgement frame for multiple access terminals. Also, the type of the media access control frame might be a frame indicating a shortened MAC header for data frames. Further, the type of the media access control frame might be a frame indicating a shortened MAC header for management frames. Also, the type of the media access control frame might be one of an enhanced PS-POLL frame, an enhanced ACK frame including a sequence number and/or a sleep time, an enhanced RTS frame, or an enhanced CTS frame. Further, the type of the media access control frame might be an enhanced PS-POLL frame, and wherein the one or more fields might be a duration field and the one or more values might be a duration value. Also, the type of the media access control frame might be an enhanced PS-POLL frame, and wherein the one or more fields is an ACK indication field and the one or more values might be an ACK indication value. Further, the one or more fields which might have a reserved value may comprise two or more fields which, in combination, have a reserved value for a particular type of media access control frame, the two or more fields having two or more values.

In another further example a wireless communications apparatus is described, comprising: a receiver configured to receive a media access control frame comprising a header comprising: a type field having a type value; and one or more fields which have a reserved value for a particular type of media access control frame, the one or more fields having one or more values; and a processor configured to: detect a type of the media access control frame based on both the type value and the one or more values; and decode the media access control frame based on the type. Also, the one or more fields may comprise a retry field, and the one or more values may comprise a retry value. Further, the retry value might have a first binary value of 0 or 1, and wherein the type value might have a second binary value of 01 or 11 when the retry value is 1. Also, the type of the media access control frame may correspond to a frame type that is reduced in length when the retry value is one as compared to a media access control frame type defined when the retry value is a zero. Also, the header may further comprises a subtype field having a subtype value, and wherein the type of the media access control frame might be further indicated by the subtype value. Further, the type of the media access control frame might be a block acknowledgement frame for multiple access terminals. Also, the type of the media access control frame might be a frame indicating a shortened MAC header for data frames. Also, the type of the media access control frame might be a frame indicating a shortened MAC header for management frames. Further, the type of the media access control frame might be one of an enhanced PS-POLL frame, an enhanced ACK frame including a sequence number and/or a sleep time, an enhanced RTS frame, or an enhanced CTS frame. Also, the type of the media access control frame might be an enhanced PS-POLL frame, and wherein the one or more fields might be a duration field and the one or more values might be a duration value. Further, the type of the media access control frame might be an enhanced PS-POLL frame, and wherein the one or more fields might be an ACK indication field and the one or more values might be an ACK indication value. Also, the one or more fields which might have a reserved value may comprise two or more fields which, in combination, might have a reserved value for a particular type of media access control frame, the two or more fields might have two or more values.

In yet another further example a wireless communications apparatus is described comprising: means for receiving a media access control frame comprising a header comprising: a type field having a type value; and one or more fields which have a reserved value for a particular type of media access control frame, the one or more fields having one or more values; means for detecting a type of the media access control frame based on both the type value and the one or more values; and means for decoding the media access control frame based on the type. Further, the one or more fields may comprise a retry field, and the one or more values may comprise a retry value. Also, the retry value might have a first binary value of 0 or 1, and wherein the type value might have a second binary value of 01 or 11 when the retry value is 1. Further, the type of the media access control frame may correspond to a frame type that is reduced in length when the retry value is one as compared to a media access control frame type defined when the retry value is a zero. Also, the header may further comprise a subtype field having a subtype value, and wherein the type of the media access control frame might be further indicated by the subtype value. Further, the type of the media access control frame might be a block acknowledgement frame for multiple access terminals. Also, the type of the media access control frame might be a frame indicating a shortened MAC header for data frames. Further, the type of the media access control frame might be a frame indicating a shortened MAC header for management frames. Also, the type of the media access control frame might be one of an enhanced PS-POLL frame, an enhanced ACK frame including a sequence number and/or a sleep time, an enhanced RTS frame, or an enhanced CTS frame. Further, the type of the media access control frame might be an enhanced PS-POLL frame, and wherein the one or more fields might be a duration field and the one or more values might be a duration value. Also, the type of the media access control frame might be an enhanced PS-POLL frame, and wherein the one or more fields might be an ACK indication field and the one or more values might be an ACK indication value. Further, the one or more fields which have a reserved value may comprise two or more fields which, in combination, might have a reserved value for a particular type of media access control frame, the two or more fields might have two or more values.

In another further example a computer-readable medium is described comprising instructions that when executed by a computer cause the computer to perform a method of communicating in a wireless network, the method comprising: receiving a media access control frame comprising a header comprising: a type field having a type value; and one or more fields which have a reserved value for a particular type of media access control frame, the one or more fields having one or more values; detecting a type of the media access control frame based on both the type value and the one or more values; and decoding the media access control frame based on the type. Also, the one or more fields may comprise a retry field, and the one or more values may comprise a retry value. Further, the retry value might have a first binary value of 0 or 1, and wherein the type value might have a second binary value of 01 or 11 when the retry value is 1. Also, the type of the media access control frame might correspond to a frame type that is reduced in length when the retry value is one as compared to a media access control frame type defined when the retry value is a zero. Also, the header may further comprise a subtype field having a subtype value, and wherein the type of the media access control frame might be further indicated by the subtype value. Further, the type of the media access control frame might be a block acknowledgement frame for multiple access terminals. Also, the type of the media access control frame might be a frame indicating a shortened MAC header for data frames. Further, the type of the media access control frame might be a frame indicating a shortened MAC header for management frames. Also, the type of the media access control frame might be one of an enhanced PS-POLL frame, an enhanced ACK frame including a sequence number and/or a sleep time, an enhanced RTS frame, or an enhanced CTS frame. Further, the type of the media access control frame might be an enhanced PS-POLL frame, and wherein the one or more fields might be a duration field and the one or more values might be a duration value. Also, the type of the media access control frame might be an enhanced PS-POLL frame, and wherein the one or more fields might be an ACK indication field and the one or more values might be an ACK indication value. Further, the one or more fields which might have a reserved value may comprise two or more fields which, in combination, have a reserved value for a particular type of media access control frame, the two or more fields having two or more values.

## Claims

1. A method of communicating in a wireless network, the method comprising:
generating (1902) by a processor a media access control frame comprising a header comprising:
a type field having a type value; and
one or more fields, including a duration field, which have a reserved value for a particular type of media access control frame, the one or more fields having one or more values, wherein the type of the media access control frame is indicated by both the type value and the one or more values, the type value indicating that the type of the media access control frame is an enhanced power save poll, PS-POLL, frame, and the one or more values of the duration field indicating a type of the enhanced PS-POLL frame; and
transmitting (1904) the media access control frame.

2. The method of claim 1, wherein the one or more fields comprise a retry field, and the one or more values comprise a retry value, wherein the retry value has a first binary value of o or 1, and wherein the type value has a second binary value of 01 or 11 when the retry value is 1.

3. The method of claim 1, wherein the one or more fields comprise a retry field, and the one or more values comprise a retry value, wherein the type of the media access control frame corresponds to a frame type that is reduced in length when the retry value is one as compared to a media access control frame type defined when the retry value is a zero.

4. A wireless communications apparatus comprising:
means for generating (2102) a media access control frame comprising a header comprising:
a type field having a type value; and
one or more fields, including a duration field, which have a reserved value for a particular type of media access control frame, the one or more fields having one or more values, wherein the type of the media access control frame is indicated by both the type value and the one or more values, the type value indicating that the type of the media access control frame is an enhanced power save poll, PS-POLL, frame, and the one or more values of the duration field indicating a type of the enhanced PS-POLL frame; and
means for transmitting (2104) the media access control frame.

5. The apparatus of claim 4, wherein the one or more fields comprise a retry field, and the one or more values comprise a retry value, wherein the retry value has a first binary value of o or 1, and wherein the type value has a second binary value of 01 or 11 when the retry value is 1.

6. The apparatus of claim 4, wherein the one or more fields comprise a retry field, and the one or more values comprise a retry value, wherein the type of the media access control frame corresponds to a frame type that is reduced in length when the retry value is one as compared to a media access control frame type defined when the retry value is a zero.

7. The apparatus of claim 4, the one or more fields comprising two or more fields, the two or more fields in combination having the reserved value, the two or more fields having two or more values, and the type of the media access control frame being indicated by both the type value and the two or more values in combination.

8. A method of communicating in a wireless network, the method comprising:
receiving (2002) with a receiver a media access control frame comprising a header comprising:
a type field having a type value; and
one or more fields, including a duration field, which have a reserved value for a particular type of media access control frame, the one or more fields having one or more values, the type value indicating that the type of the media access control frame is an enhanced power save poll, PS-POLL, frame, and the one or more values of the duration field indicating a type of the enhanced PS-POLL frame;
detecting (2004) a type of the media access control frame based on both the type value and the one or more values; and
decoding (2006) the media access control frame based on the type.

9. The method of claim 8, wherein the one or more fields comprise a retry field and the one or more values comprise a retry value, wherein the retry value has a first binary value of o or 1, and wherein the type value has a second binary value of 01 or 11 when the retry value is 1.

10. The method of claim 8, wherein the one or more fields comprise a retry field and the one or more values comprise a retry value, wherein the type of the media access control frame corresponds to a frame type that is reduced in length when the retry value is one as compared to a media access control frame type defined when the retry value is a zero.

11. The method of claim 8, the one or more fields comprising two or more fields, the two or more field in combination having a reserved value, and the two or more fields having two or more values.

12. A wireless communications apparatus comprising:
means for receiving (2202) a media access control frame comprising a header comprising:
a type field having a type value; and
one or more fields, including a duration field, which have a reserved value for a particular type of media access control frame, the one or more fields having one or more values;
means for detecting (2204) a type of the media access control frame based on both the type value and the one or more values, the type value indicating that the type of the media access control frame is an enhanced power save poll, PS-POLL, frame, and the one or more values of the duration field indicating a type of the enhanced PS-POLL frame; and
means for decoding (2206) the media access control frame based on the type.

13. The apparatus of claim 12, wherein the one or more fields comprise a retry field and the one or more values comprise a retry value, wherein the retry value has a first binary value of o or 1, and wherein the type value has a second binary value of 01 or 11 when the retry value is 1.

14. The apparatus of claim 12, wherein the one or more fields comprise a retry field and the one or more values comprise a retry value, wherein the type of the media access control frame corresponds to a frame type that is reduced in length when the retry value is one as compared to a media access control frame type defined when the retry value is a zero.

15. A non-transitory computer-readable medium comprising instructions that when executed by a computer cause the computer to perform a method according to any of claims 1 to 3 and/or 8 to 10.

## Patentansprüche

1. Ein Verfahren von Kommunizieren in einem drahtlosen Netzwerk, das Verfahren aufweisend:
Erzeugen (1902) durch einen Prozessor eines Medien-Zugriffs-Steuerungsrahmens aufweisend einen Header aufweisend:
ein Typenfeld enthaltend einen Typenwert; und
eines oder mehrere Felder, umfassend ein Zeitdauerfeld, welches einen reservierten Wert hat für einen bestimmten Typ von Medien-Zugriffs-Steuerungsrahmen, wobei die einen oder mehreren Felder einen oder mehr Werte haben, wobei der Typ von dem Medien-Zugriffs-Steuerungsrahmen angezeigt ist durch sowohl den Typenwert als auch die einen oder mehr Werte, wobei der Typenwert anzeigt, dass der Typ von dem Medien-Zugriffs-Steuerungsrahmen ein erweiterter Leistungseinsparungsaufruf, PS-POLL, Rahmen ist und die einen oder mehreren Werte von dem Zeitdauerfeld anzeigen, einen Typ von dem erweiterten PS-POLL Rahmen; und
Übertragen (1904) des Medien-Zugriffs-Steuerungsrahmens.

2. Das Verfahren von Anspruch 1, wobei die einen oder mehreren Felder aufweisen ein Wiederversuchsfeld und die einen oder mehreren Werte aufweisen einen Wiederversuchswert, wobei der Wiederversuchswert einen ersten binären Wert von o oder 1 hat und wobei der Typenwert hat einen zweiten binären Wert von 01 oder 11 wenn der Wiederversuchswert 1 ist.

3. Das Verfahren von Anspruch 1, wobei die einen oder mehreren Felder aufweisen ein Wiederversuchsfeld und die einen oder mehreren Werte aufweisen einen Wiederversuchswert, wobei der Typ von dem Medien-Zugriffs-Steuerungsrahmen korrespondiert zu einem Rahmentyp, der reduziert ist in der Länge wenn der Wiederversuchswert eins ist im Vergleich zu einem Medien-Zugriffs-Steuerungs-Rahmentyp definiert wenn der Wiederversuchswert eine Null ist.

4. Eine drahtlose Kommunikationsvorrichtung aufweisend:
Mittel zum Erzeugen (2102) eines Medien-Zugriffs-Steuerungsrahmens aufweisend einen Header aufweisend:
ein Typenfeld enthaltend einen Typenwert; und
eines oder mehrere Felder, umfassend ein Zeitdauerfeld, welches einen reservierten Wert hat für einen bestimmten Typ von Medien-Zugriffs-Steuerungsrahmen, wobei die einen oder mehreren Felder einen oder mehr Werte haben, wobei der Typ von dem Medien-Zugriffs-Steuerungsrahmen angezeigt ist durch sowohl den Typenwert als auch die einen oder mehr Werte, wobei der Typenwert anzeigt, dass der Typ von dem Medien-Zugriffs-Steuerungsrahmen ein erweiterter Leistungseinsparungsaufruf, PS-POLL, Rahmen ist und die einen oder mehreren Werte von dem Zeitdauerfeld anzeigen, einen Typ von dem erweiterten PS-Poll Rahmen; und
Mittel zum Übertragen (2104) des Medien-Zugriffs-Steuerungsrahmens.

5. Die Vorrichtung von Anspruch 4, wobei die einen oder mehreren Felder aufweisen ein Wiederversuchsfeld und die einen oder mehreren Werte aufweisen einen Wiederversuchswert, wobei der Wiederversuchswert einen ersten binären Wert von o oder 1 hat und wobei der Typenwert hat einen zweiten binären Wert von 01 oder 11 wenn der Wiederversuchswert 1 ist.

6. Die Vorrichtung von Anspruch 4, wobei die einen oder mehreren Felder aufweisen ein Wiederversuchsfeld und die einen oder mehreren Werte aufweisen einen Wiederversuchswert, wobei der Typ von dem Medien-Zugriffs-Steuerungsrahmens korrespondiert zu einem Rahmentyp, der reduziert ist in der Länge wenn der Wiederversuchswert eins ist im Vergleich zu einem Medien-Zugriffs-Steuerungs-Rahmentyp definiert wenn der Wiederversuchswert eine Null ist.

7. Die Vorrichtung von Anspruch 4, wobei die einen oder mehr Felder aufweisen zwei oder mehr Felder, wobei die zwei oder mehr Felder in Kombination den reservierten Wert besitzen, wobei die zwei oder mehr Felder zwei oder mehr Werte besitzen, und der Typ von dem Medien-Zugriffs-Steuerungs-Rahmen angezeigt ist durch sowohl den Typenwert als auch die zwei oder mehr Werte in Kombination.

8. Ein Verfahren von Kommunizieren in einem drahtlosen Netzwerk, das Verfahren aufweisend:
Empfangen (2002) mit einem Empfänger einen Medien-Zugriffs-Steuerungsrahmen aufweisend einen Header aufweisend:
ein Typenfeld enthaltend einen Typenwert; und
eines oder mehrere Felder, umfassend ein Zeitdauerfeld, welches einen reservierten Wert hat für einen bestimmten Typ von Medien-Zugriffs-Steuerungsrahmen, wobei die einen oder mehreren Felder einen oder mehr Werte haben, wobei der Typenwert anzeigt, dass der Typ von dem Medien-Zugriffs-Steuerungsrahmen ein erweiterter Leistungseinsparungsaufruf, PS-POLL, Rahmen ist und die einen oder mehreren Werte von dem Zeitdauerfeld anzeigen, einen Typ von dem erweiterten PS-POLL Rahmen; Detektieren (2004) eines Typs von dem Medien-Zugriffs-Steuerungsrahmen basierend auf sowohl dem Typenwert als auch den einen oder mehreren Werten; und
Dekodieren (2006) des Medien-Zugriffs-Steuerungsrahmens basierend auf dem Typ.

9. Das Verfahren von Anspruch 8, wobei die einen oder mehreren Felder aufweisen ein Wiederversuchsfeld und die einen oder mehreren Werte aufweisen einen Wiederversuchswert, wobei der Wiederversuchswert einen ersten binären Wert von o oder 1 hat und wobei der Typenwert hat einen zweiten binären Wert von 01 oder 11 wenn der Wiederversuchswert 1 ist.

10. Das Verfahren von Anspruch 8, wobei die einen oder mehreren Felder aufweisen ein Wiederversuchsfeld und die einen oder mehreren Werte aufweisen einen Wiederversuchswert, wobei der Typ von dem Medien-Zugriffs-Steuerungsrahmen korrespondiert zu einem Rahmentyp, der reduziert ist in der Länge wenn der Wiederversuchswert eins ist im Vergleich zu einem Medien-Zugriffs-Steuerungs-Rahmentyp definiert wenn der Wiederversuchswert eine Null ist.

11. Das Verfahren von Anspruch 8, wobei die einen oder mehreren Felder aufweisen zwei oder mehr Felder, wobei die zwei oder mehreren Felder in Kombination besitzen einen reservierten Wert und die zwei oder mehreren Felder besitzen zwei oder mehr Werte.

12. Eine drahtlose Kommunikationsvorrichtung aufweisend:
Mittel zum Empfangen (2202) einen Medien-Zugriffs-Steuerungsrahmen aufweisend einen Header aufweisend:
ein Typenfeld enthaltend einen Typenwert; und
eines oder mehrere Felder, umfassend ein Zeitdauerfeld, welches einen reservierten Wert hat für einen bestimmten Typ von Medien-Zugriffs-Steuerungsrahmen, wobei die einen oder mehreren Felder, die einen oder mehr Werte haben;
Mittel zum Detektieren (2204) eines Typs von dem Medien-Zugriffs-Steuerungsrahmen basierend auf sowohl dem Typenwert als auch den einen oder mehreren Werten, wobei der Typenwert anzeigt, dass der Typ von dem Medien-Zugriffs-Steuerungsrahmen ein erweiterter Leistungseinsparungsaufruf, PS-POLL, Rahmen ist und die einen oder mehreren Werte von dem Zeitdauerfeld anzeigen, einen Typ von dem erweiterten PS-POLL Rahmen; und
Mittel zum Dekodieren (2206) des Medien-Zugriffs-Steuerungsrahmens basierend auf dem Typ.

13. Die Vorrichtung von Anspruch 12, wobei die einen oder mehreren Felder aufweisen ein Wiederversuchsfeld und die einen oder mehreren Werte aufweisen einen Wiederversuchswert, wobei der Wiederversuchswert einen ersten binären Wert von o oder 1 hat und wobei der Typenwert hat einen zweiten binären Wert von 01 oder 11 wenn der Wiederversuchswert 1 ist.

14. Die Vorrichtung von Anspruch 12, wobei die einen oder mehreren Felder aufweisen ein Wiederversuchsfeld und die einen oder mehreren Werte aufweisen einen Wiederversuchswert, wobei der Typ von dem Medien-Zugriffs-Steuerungsrahmen korrespondiert zu einem Rahmentyp, der reduziert ist in der Länge wenn der Wiederversuchswert eins ist im Vergleich zu einem Medien-Zugriffs-Steuerungs-Rahmentyp definiert wenn der Wiederversuchswert eine Null ist.

15. Ein nicht-vergängliches computer-lesbares Medium aufweisend Instruktionen, die wenn sie durch einen Computer ausgeführt werden verursachen, dass ein Computer ein Verfahren gemäß einen von den Ansprüchen 1 bis 3 und/oder 8 bis 10 durchführt.

## Revendications

1. Procédé de communication dans un réseau sans fil, le procédé comprenant :
la génération (1902), par un processeur, d'une trame de contrôle d'accès au support comprenant une en-tête comprenant :
un champ de type comprenant une valeur de type ; et
un ou plusieurs champs, comprenant un champ de durée, qui ont une valeur réservée pour un type particulier de trame de contrôle d'accès au support, les un ou plusieurs champs ayant une ou plusieurs valeurs, dans lequel le type de la trame de contrôle d'accès au support est indiqué à la fois par la valeur de type et les une ou plusieurs valeurs, la valeur de type indiquant que le type de la trame de contrôle d'accès au support est une trame de sondage d'économie d'énergie, PS-POLL, améliorée, et les une ou plusieurs valeurs du champ de durée indiquant un type de trame PS-POLL améliorée ; et
la transmission (1904) de la trame de contrôle d'accès au support.

2. Procédé selon la revendication 1, dans lequel les un ou plusieurs champs comprennent un champ de nouvelle tentative, et les une ou plusieurs valeurs comprennent une valeur de nouvelle tentative, dans lequel la valeur de nouvelle tentative a une première valeur binaire de o ou 1, et dans lequel la valeur de type a une deuxième valeur binaire de 01 ou 11 quand la valeur de nouvelle tentative est 1.

3. Procédé selon la revendication 1, dans lequel les un ou plusieurs champs comprennent un champ de nouvelle tentative, et les une ou plusieurs valeurs comprennent une valeur de nouvelle tentative, dans lequel le type de la trame de contrôle d'accès au support correspond à un type de trame qui est réduit en longueur quand la valeur de nouvelle tentative est un en comparaison à un type de trame de contrôle d'accès au support défini quand la valeur de nouvelle tentative est un zéro.

4. Appareil de communication sans fil comprenant :
des moyens pour générer (2102) une trame de contrôle d'accès au support comprenant une en-tête comprenant :
un champ de type comprenant une valeur de type ; et
un ou plusieurs champs, comprenant un champ de durée, qui ont une valeur réservée pour un type particulier de trame de contrôle d'accès au support, les un ou plusieurs champs ayant une ou plusieurs valeurs, dans lequel le type de la trame de contrôle d'accès au support est indiqué à la fois par la valeur de type et les une ou plusieurs valeurs, la valeur de type indiquant que le type de la trame de contrôle d'accès au support est une trame de sondage d'économie d'énergie, PS-POLL, améliorée, et les une ou plusieurs valeurs du champ de durée indiquant un type de trame PS-POLL améliorée ; et
des moyens pour transmettre (2104) la trame de contrôle d'accès au support.

5. Appareil selon la revendication 4, dans lequel les un ou plusieurs champs comprennent un champ de nouvelle tentative, et les une ou plusieurs valeurs comprennent une valeur de nouvelle tentative, dans lequel la valeur de nouvelle tentative a une première valeur binaire de o ou 1, et dans lequel la valeur de type a une deuxième valeur binaire de 01 ou 11 quand la valeur de nouvelle tentative est 1.

6. Appareil selon la revendication 4, dans lequel les un ou plusieurs champs comprennent un champ de nouvelle tentative, et les une ou plusieurs valeurs comprennent une valeur de nouvelle tentative, dans lequel le type de la trame de contrôle d'accès au support correspond à un type de trame qui est réduit en longueur quand la valeur de nouvelle tentative est un en comparaison à un type de trame de contrôle d'accès au support défini quand la valeur de nouvelle tentative est un zéro.

7. Appareil selon la revendication 4, les un ou plusieurs champs comprenant au moins deux champs, les au moins deux champs en combinaison ayant la valeur réservée, les au moins deux champs ayant au moins deux valeurs, et le type de la trame de contrôle d'accès au support étant indiqué à la fois par la valeur de type et les au moins deux valeurs en combinaison.

8. Procédé de communication dans un réseau sans fil, le procédé comprenant :
la réception (2002) avec un récepteur d'une trame de contrôle d'accès au support comprenant une en-tête comprenant :
un champ de type comprenant une valeur de type ; et
un ou plusieurs champs, comprenant un champ de durée, qui ont une valeur réservée pour un type particulier de trame de contrôle d'accès au support, les un ou plusieurs champs ayant une ou plusieurs valeurs, la valeur de type indiquant que le type de la trame de contrôle d'accès au support est une trame de sondage d'économie d'énergie, PS-POLL, améliorée, et les une ou plusieurs valeurs du champ de durée indiquant un type de trame PS-POLL améliorée ;
la détection (2004) d'un type de la trame de contrôle d'accès au support sur la base à la fois de la valeur de type et des au moins deux valeurs ; et
le décodage (2006) de la trame de contrôle d'accès au support sur la base du type.

9. Procédé selon la revendication 8, dans lequel les un ou plusieurs champs comprennent un champ de nouvelle tentative, et les une ou plusieurs valeurs comprennent une valeur de nouvelle tentative, dans lequel la valeur de nouvelle tentative a une première valeur binaire de o ou 1, et dans lequel la valeur de type a une deuxième valeur binaire de 01 ou 11 quand la valeur de nouvelle tentative est 1.

10. Procédé selon la revendication 8, dans lequel les un ou plusieurs champs comprennent un champ de nouvelle tentative, et les une ou plusieurs valeurs comprennent une valeur de nouvelle tentative, dans lequel le type de la trame de contrôle d'accès au support correspond à un type de trame qui est réduit en longueur quand la valeur de nouvelle tentative est un en comparaison à un type de trame de contrôle d'accès au support défini quand la valeur de nouvelle tentative est un zéro.

11. Procédé selon la revendication 8, les un ou plusieurs champs comprenant au moins deux champs, les au moins deux champs en combinaison ayant une valeur réservée, et les au moins deux champs ayant au moins deux valeurs.

12. Appareil de communication sans fil comprenant :
des moyens pour recevoir (2202) une trame de contrôle d'accès au support comprenant une en-tête comprenant :
un champ de type comprenant une valeur de type ; et
un ou plusieurs champs, comprenant un champ de durée, qui ont une valeur réservée pour un type particulier de trame de contrôle d'accès au support, les un ou plusieurs champs ayant une ou plusieurs valeurs ;
des moyens pour détecter (2204) un type de la trame de contrôle d'accès au support sur la base à la fois de la valeur de type et des au moins deux valeurs, la valeur de type indiquant que le type de la trame de contrôle d'accès au support est une trame de sondage d'économie d'énergie, PS-POLL, améliorée, et les une ou plusieurs valeurs du champ de durée indiquant un type de trame PS-POLL améliorée ; et
des moyens pour décoder (2206) la trame de contrôle d'accès au support sur la base du type.

13. Appareil selon la revendication 12, dans lequel les un ou plusieurs champs comprennent un champ de nouvelle tentative, et les une ou plusieurs valeurs comprennent une valeur de nouvelle tentative, dans lequel la valeur de nouvelle tentative a une première valeur binaire de o ou 1, et dans lequel la valeur de type a une deuxième valeur binaire de 01 ou 11 quand la valeur de nouvelle tentative est 1.

14. Appareil selon la revendication 12, dans lequel les un ou plusieurs champs comprennent un champ de nouvelle tentative, et les une ou plusieurs valeurs comprennent une valeur de nouvelle tentative, dans lequel le type de la trame de contrôle d'accès au support correspond à un type de trame qui est réduit en longueur quand la valeur de nouvelle tentative est un en comparaison à un type de trame de contrôle d'accès au support défini quand la valeur de nouvelle tentative est un zéro.

15. Support lisible par ordinateur non transitoire comprenant des instructions qui, quand elles sont exécutées par un ordinateur, amènent l'ordinateur à effectuer un procédé selon l'une quelconque des revendications 1 à 3 et/ou 8 à 10.
